(19) **Europäisches Patentamt**
**European Patent Office**
**Office européen des brevets**

(11) **EP 4 625 306 A1**

(12) **EUROPEAN PATENT APPLICATION**
published in accordance with Art. 153(4) EPC

(43) Date of publication:
**01.10.2025 Bulletin 2025/40**

(21) Application number: **23893316.2**

(22) Date of filing: **25.08.2023**

(51) International Patent Classification (IPC):
*G06T 3/00* (2024.01)

(52) Cooperative Patent Classification (CPC):
**G06F 17/16; G06T 3/00**

(86) International application number:
**PCT/CN2023/114871**

(87) International publication number:
**WO 2024/109222 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.11.2022 CN 202211459711**

(71) Applicant: **Beijing Horizon Robotics Technology Research and Development Co., Ltd.**
**Beijing 100094 (CN)**

(72) Inventors:
• **MENG, Wenming**
**Beijing 100094 (CN)**
• **ZHU, Hongmei**
**Beijing 100094 (CN)**
• **ZHANG, Qian**
**Beijing 100094 (CN)**

(74) Representative: **Patentanwälte Magenbauer & Kollegen**
**Partnerschaft mbB**
**Plochinger Straße 109**
**73730 Esslingen (DE)**

(54) **IMAGE DATA PROCESSING METHOD AND APPARATUS BASED ON HOMOGRAPHY TRANSFORMATION, AND MEDIUM**

(57) Disclosed are a homography transformation-based image data processing method and apparatus, an electronic device, and a medium, including: obtaining an initial homography transformation matrix corresponding to initial image data in a first angle of view (S101), wherein each of initial elements in the initial homography transformation matrix occupies a first byte count of bytes; quantizing the initial elements in the initial homography transformation matrix to generate a quantized homography transformation matrix (S103), where each quantized element in the quantized homography transformation matrix occupies a second byte count of bytes, and the second byte count is less than the first byte count; generating a coordinate mapping matrix based on the quantized homography transformation matrix (S105); and further obtaining target image data in a second angle of view based on the initial image data and the coordinate mapping matrix (S107). In this case, generating the coordinate mapping matrix based on a quantized homography matrix that occupies a relatively small count of bytes after quantization saves space occupied by the quantized homography transformation matrix; and also improves a generation speed of the coordinate mapping matrix is improved, thereby improving overall efficiency of an image data processing process.

```
┌─────────────────────────────────────┐  S101
│ Obtaining an initial homography      │
│ transformation matrix corresponding  │
│ to initial image data in a first     │
│ angle of view                        │
└─────────────────────────────────────┘
                 │
┌─────────────────────────────────────┐  S103
│ Quantizing the initial elements in   │
│ the initial homography transformation│
│ matrix to generate a quantized       │
│ homography transformation matrix     │
└─────────────────────────────────────┘
                 │
┌─────────────────────────────────────┐  S105
│ Generating a coordinate mapping      │
│ matrix based on the quantized        │
│ homography transformation matrix     │
└─────────────────────────────────────┘
                 │
┌─────────────────────────────────────┐  S107
│ Determining target image data in a   │
│ second angle of view based on the    │
│ initial image data and the           │
│ coordinate mapping matrix            │
└─────────────────────────────────────┘
```

FIG. 2

EP 4 625 306 A1

## Description

This disclosure claims priority to Chinese patent application No. 202211459711.6, filed on November 21, 2022 and entitled "HOMOGRAPHY TRANSFORMATION-BASED IMAGE DATA PROCESSING METHOD AND APPARATUS, AND MEDIUM", which is incorporated herein by references in its entirety.

## FIELD OF THE INVENTION

This disclosure relates to the field of vision, and in particular, to a homography transformation-based image data processing method and apparatus, an electronic device, and a computer-readable storage medium.

## BACKGROUND OF THE INVENTION

Homography transformation is generally used to convert input in one angle of view into output in another angle of view, and plays a very important role in image data processing such as image correction, angle-of-view transformation, image stitching, camera pose estimation, visual simultaneous localization and mapping (SLAM), and other fields.

Taking angle-of-view transformation as an example, a homography transformation process is to first generate a coordinate mapping matrix based on a homography transformation matrix corresponding to initial image data in a certain angle of view, and then input an index value in data (that is, the initial image data) based on the coordinate mapping matrix to generate output data in an angle of view different from that of input data, so as to obtain transformed target image data in another angle of view. In related technologies, the homography transformation process is to use a homography transformation matrix in a data format of float32 to generate a coordinate mapping matrix in the data format of float32.

However, the generation process of the coordinate mapping matrix in the related technologies has a relatively slow speed, which affects image data processing efficiency.

## SUMMARY OF THE INVENTION

To resolve the foregoing technical problem, this disclosure is proposed. Embodiments of this disclosure provide a homography transformation-based image data processing method and apparatus, an electronic device, and a medium.

According to an aspect of an embodiment of this disclosure, a homography transformation-based image data processing method is provided, including:

   obtaining an initial homography transformation matrix corresponding to initial image data in a first angle of view, wherein each of initial elements in the initial homography transformation matrix occupies a first byte count of bytes;
   quantizing the initial elements in the initial homography transformation matrix to generate a quantized homography transformation matrix, wherein each of quantized elements in the quantized homography transformation matrix occupies a second byte count of bytes, and the second byte count is less than the first byte count;
   generating a coordinate mapping matrix based on the quantized homography transformation matrix; and
   obtaining target image data in a second angle of view based on the initial image data and the coordinate mapping matrix.

According to another aspect of an embodiment of this disclosure, a homography transformation-based image data processing apparatus is provided, including:

   an obtaining module, configured to obtain an initial homography transformation matrix corresponding to initial image data in a first angle of view, wherein initial elements in the initial homography transformation matrix occupy a first byte count of bytes;
   a quantization module, configured to quantize the initial elements in the initial homography transformation matrix to generate a quantized homography transformation matrix, wherein a quantized element in the quantized homography transformation matrix occupies a second byte count of bytes, and the second byte count is less than the first byte count; and
   a generation module, configured to generate a coordinate mapping matrix based on the quantized homography transformation matrix, and determine target image data in a second angle of view based on the initial image data and the coordinate mapping matrix.

According to still another aspect of an embodiment of this disclosure, a computer-readable storage medium is provided. The storage medium stores a computer program, and the computer program is used for implementing the homography transformation-based image data processing method described above.

According to yet another aspect of an embodiment of this disclosure, an electronic device is provided, wherein the electronic device includes:

a processor; and
a memory, configured to store processor-executable instructions, wherein
the processor is configured to read the executable instructions from the memory, and execute the instructions to implement the homography transformation-based image data processing method described above.

According to still yet aspect of an embodiment of this disclosure, a computer program product is provided. When instructions in the computer program product are executed by a processor, the homography transformation-based image data processing method described above is implemented.

It may be learned from the foregoing technical solutions that, according to the homography transformation-based image data processing method and apparatus, the electronic device, and the computer-readable storage medium that are provided in the embodiments of this disclosure, in the initial homography transformation matrix corresponding to the initial image data in the first angle of view, initial elements occupying the first byte count of bytes are quantized into the quantized element occupying the second byte count of bytes, so as to generate the quantized homography transformation matrix. In other words, the initial homography transformation matrix is quantized to the quantized homography transformation matrix, thereby reducing space occupied by the quantized element in the quantized homography transformation matrix. Subsequently, the coordinate mapping matrix is generated based on the quantized homography transformation matrix, and then the target image data in the second angle of view is determined based on the initial image data and the coordinate mapping matrix. Compared to generating, in an image data processing process, a coordinate mapping matrix through a homography transformation matrix formed by initial elements occupying a first byte count in related technologies, in the embodiments of this disclosure, generating the coordinate mapping matrix based on the quantized homography matrix that occupies a relatively small count of bytes after quantization saves space occupied by the quantized homography transformation matrix; and also improves a generation speed of the coordinate mapping matrix, thereby improving overall efficiency of a homography transformation-based image data processing process.

## BRIEF DESCRIPTION OF THE DRAWINGS

FIG. 1 is a schematic diagram of image data in two angles of view in a homography transformation-based image data processing method according to an exemplary embodiment of this disclosure;
FIG. 2 is a schematic flowchart of a homography transformation-based image data processing method according to an exemplary embodiment of this disclosure;
FIG. 3 is a block diagram of a flow of generating a coordinate mapping matrix in a homography transformation-based image data processing method according to an exemplary embodiment of this disclosure;
FIG. 4 is another schematic flowchart of a homography transformation-based image data processing method according to an exemplary embodiment of this disclosure;
FIG. 5 is a flowchart of generating a quantized homography transformation matrix in a homography transformation-based image data processing method according to an exemplary embodiment of this disclosure;
FIG. 6 is another flowchart of generating a coordinate mapping matrix in a homography transformation-based image data processing method according to an exemplary embodiment of this disclosure;
FIG. 7 is a flowchart corresponding to FIG. 6;
FIG. 8 is still another flowchart of generating a coordinate mapping matrix in a homography transformation-based image data processing method according to an exemplary embodiment of this disclosure;
FIG. 9 is a diagram of a structure of a homography transformation-based image data processing apparatus according to an exemplary embodiment of this disclosure;
FIG. 10 is a diagram of another structure of a homography transformation-based image data processing apparatus according to an exemplary embodiment of this disclosure;
FIG. 11 is a diagram of a structure of a quantization module in a homography transformation-based image data processing apparatus according to an exemplary embodiment of this disclosure; and
FIG. 12 is a diagram of a structure of an electronic device according to an exemplary embodiment of this disclosure.

## DETAILED DESCRIPTION OF THE EMBODIMENTS

Exemplary embodiments of this disclosure are described below in detail with reference to accompanying drawings. Obviously, the embodiments described are merely some, rather than all of embodiments of this disclosure.

It should be understood that this disclosure is not limited by the exemplary embodiments described herein.

It should be noted that unless otherwise specified, the scope of this disclosure is not limited by relative arrangement, numeric expressions, and numerical values of components and steps described in these embodiments.

**Application overview**

In related technologies, data in a homography transformation matrix corresponding to initial image data in a certain angle of view usually has a data format of float32. To be specific, the homography transformation matrix is stored in a computer program, and a storage format of the data is usually 32-bit float-type binary storage, that is, each data element occupies 32 bits. Correspondingly, each data element occupies 4 bytes. A homography transformation matrix H may be represented by using $H = \begin{bmatrix} h_{11} & h_{12} & h_{13} \\ h_{21} & h_{22} & h_{23} \\ h_{31} & h_{32} & h_{33} \end{bmatrix}$.

For example, in the homography transformation matrix H, $h_{11}$ is 5.0 represented in decimal, and a corresponding binary notation is 101.0, which is equivalent to $1.01 \times 2^{\wedge}2$. In this case, the data format of float32 is expressed as 00111110001000000000000000000000. In other words, 5.0 in the decimal notation occupies 32 bits when being represented in the data format of float32, wherein a highest 1 bit is a sign bit (that is, 0, corresponding to a positive number), next 8 bits are exponents (that is, 01111100, corresponding to 2), and remaining 23 bits are the significand (that is, 01000000000000000000000, corresponding to 01).

When generating a coordinate mapping matrix through the homography transformation matrix H, it is needed to perform operation processing on data in the homography transformation matrix H; and correspondingly, it is needed to perform operation processing on each digit in data. In this case, an operational speed of the homography transformation matrix H is reduced. In other words, a speed of generating the coordinate mapping matrix through the homography transformation matrix H is relatively slow. Moreover, target image data in another angle of view is determined based on the coordinate mapping matrix, which reduces efficiency of determining the target image data in another angle of view based on homography transformation.

In view of the above, embodiments of this disclosure provide a homography transformation-based image data processing method and apparatus, an electronic device, and a medium to improve a generation speed of the coordinate mapping matrix, thereby improving image data processing efficiency.

**Exemplary system**

Homography transformation may be simply understood for describing a positional mapping relationship of an object between a world coordinate system and a pixel coordinate system. The homography transformation plays a very important role in fields such as image correction, image visual transformation, image stitching, camera pose estimation, and visual SLAM.

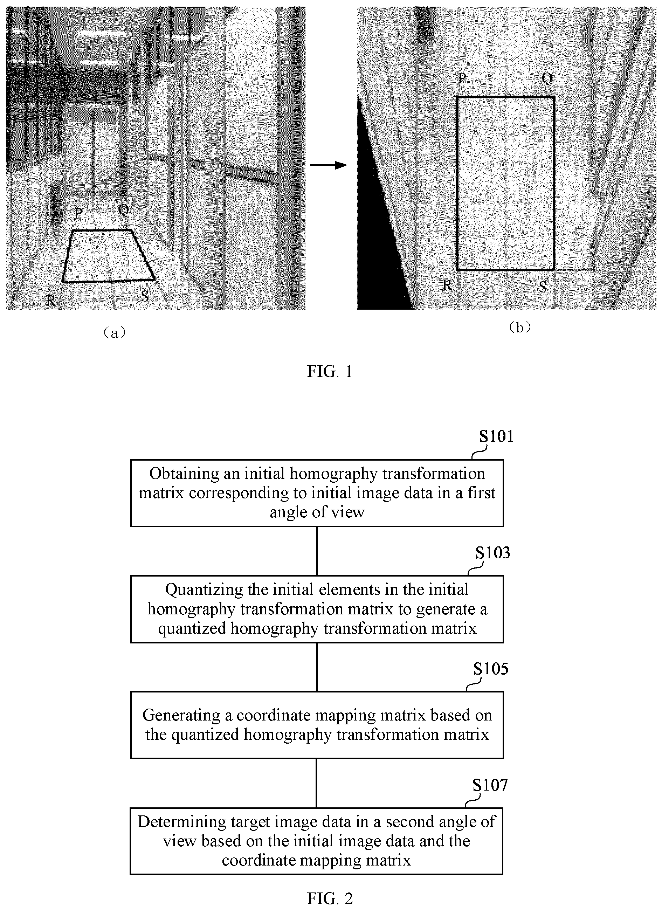

For example, a homography transformation process may be used to convert an image captured from one angle to another angle of view, thereby implementing image angle-of-view transformation. FIG. 1 is a schematic diagram of image data in two angles of view in a homography transformation-based image data processing method according to an exemplary embodiment of this disclosure. As shown in FIG. 1, taking angle-of-view transformation as an example, when capturing ground of an indoor hallway, an image within a black box enclosed by sampling points P, Q, R, and S in FIG. 1(a) is taken from a first angle of view, while an image within a black box enclosed by sampling points P, Q, R, and S in FIG. 1(b) is taken from a second angle of view, that is, is a top view. During image data processing, the homography transformation-based image data processing method may be used to convert image data in the first angle of view in FIG. 1(a) into image data in the second angle of view in FIG. 1(b), that is, to convert the image data in the first angle of view (that is, a side view) in FIG. 1(a) into the image data in the second angle of view (that is, a top view) in FIG. 1(b), so as to facilitate observation of image feature data of an object in different angles of view in certain scenarios.

Further, taking an autonomous driving assistance system of a vehicle as an example, to adapt to observation habits of a driver, it is hoped to obtain an exterior top view of the entire vehicle at a certain moment, so as to better grasp environments around the vehicle in combination with image data obtained by a camera at a side of the vehicle. In practical design, due to limitations of a camera angle and a range, a camera for observing a top portion of the vehicle usually takes photos for the top portion of the vehicle from a side of the top portion of the vehicle (such as the first angle of view) to obtain image data about the top portion of the vehicle in the first angle of view. The image data about the top portion of the vehicle is not conducive to observing an overall view of the top portion of the vehicle, and goes against the observation habits of the driver. On this basis, a homography transformation method may be used to convert the image data about the top portion of the vehicle in the first angle of view into image data about the top portion of the vehicle in the second angle of view (that is, a top view of the top portion of the vehicle), to better obtain conditions of all positions at the top portion of the vehicle, thereby better grasping the environments surrounding the vehicle.

Taking an example of a warehouse robot capturing a shelf of a storage warehouse, the first angle of view may be an angle of view at which the warehouse robot captures the shelf in a direction at an included angle of 45° to a front side of the shelf, while the second angle of view may be an angle of view at which the warehouse robot captures the shelf from the front side of the shelf. Actually, there may be a lot of shelves or clutter in the storage warehouse. The storage robot cannot move to the front side of the shelf to capture label content and other information on the front side of the shelf, but can only capture the shelf from other angles, for example, can capture the shelf from the first angle of view (such as the angle of view at an included angle of 45° to the front side of the shelf). In this way, through a homography transformation process, the first angle of view may be converted into the second angle of view (that is, an angle of view for capturing the shelf from the front side). In this way, relevant information such as the label content on the front side of the shelf may be intuitively obtained from an image in the second angle of view, thereby facilitating information collection of actual shelves or positioning of the storage robot.

Actually, a homography transformation-based image data processing process (such as visual transformation) includes two steps. The first step is to generate a coordinate mapping matrix based on a homography transformation matrix corresponding to initial image data in the first angle of view. The second step is to input an index value in the data based on the coordinate mapping matrix, to finally generate output data. The input data is poses of a plurality of sampling points in the initial image data in the first angle of view (such as coordinate values in a pixel coordinate system and corresponding image data), and the output data is poses of the sampling points in the corresponding initial image data in target image data in the second angle of view (such as coordinate values of the various sampling points in the pixel coordinate system and corresponding image data).

It may be understood that a value at a position $(i, j)$ in the input data matches a value at a position $(i', j')$ in the output data, wherein $(i, j)$ and $(i', j')$ satisfy the following constraint relationship:

$$\begin{bmatrix} i` \\ j` \\ 1 \end{bmatrix} = \text{H} \begin{bmatrix} i \\ j \\ 1 \end{bmatrix} = \begin{bmatrix} h_{11} & h_{12} & h_{13} \\ h_{21} & h_{22} & h_{23} \\ h_{31} & h_{32} & h_{33} \end{bmatrix} \begin{bmatrix} i \\ j \\ 1 \end{bmatrix}$$

H represents the homography transformation matrix. Actually, the homography transformation matrix is a 3 * 3 non-singular matrix.

It may be understood that the homography transformation matrix H is a matrix with three rows and three columns, where $h_{11}$, $h_{12}$, ..., and $h_{33}$ represent elements in the homography transformation matrix H, respectively.

According to a homography transformation-based image data processing method and apparatus, an electronic device, and a computer-readable storage medium that are provided in the embodiments of this disclosure, before generating the coordinate mapping matrix based on the homography transformation matrix, an initial homography transformation matrix corresponding to the initial image data in the first angle of view is first obtained, and the initial element occupying a first byte count in the initial homography transformation matrix is quantized into a quantized element occupying a second byte count, so as to generate a quantized homography transformation matrix. In other words, the initial homography transformation matrix is quantized to the quantized homography transformation matrix, thereby reducing space occupied by the quantized element in the quantized homography transformation matrix. Subsequently, the coordinate mapping matrix is generated based on the quantized homography transformation matrix, and then the initial image data in the first angle of view is transformed into the target image data in the second angle of view based on the coordinate mapping matrix. Compared to generating a coordinate mapping matrix through a homography transformation matrix formed by initial elements occupying a first byte count in related technologies, in the embodiments of this disclosure, the coordinate mapping matrix is generated based on the quantized homography matrix that occupies a relatively small count of bytes after quantization. In this way, on one hand, space occupied by the quantized homography transformation matrix is saved; and on the other hand, a generation speed of the coordinate mapping matrix is improved, thereby improving overall efficiency of an image data processing process.

**Exemplary method**

FIG. 2 is a flowchart of a homography transformation-based image data processing method according to an exemplary embodiment of this disclosure. This method may be applied to an electronic device. As shown in FIG. 1 and FIG. 2, the method includes the following steps.

S101: Obtaining an initial homography transformation matrix corresponding to initial image data in a first angle of view.

For the initial image data in the first angle of view, reference may be made to image data within a black box enclosed by sampling points P, Q, R, and S in FIG. 1(a). For example, the initial image data includes coordinate values and image data corresponding to the sampling points P, Q, R, and S.

An initial element in the initial homography transformation matrix occupies a first byte count.

In this embodiment of this disclosure, the initial homography transformation matrix is a homography transformation matrix pre-calculated based on coordinate values from a plurality of different angles. The initial homography transformation matrix is represented by using $H_1$, as shown below:

$$H_1 = \begin{bmatrix} h_{11} & h_{12} & h_{13} \\ h_{21} & h_{22} & h_{23} \\ h_{31} & h_{32} & h_{33} \end{bmatrix}$$

$h_{11}, h_{12}, h_{13}, ...,$ and $h_{33}$ respectively represent an initial element in $H_1$. Correspondingly, the first byte count is 4 and a count of bits is 32.

For example, an initial element in the initial homography transformation matrix $H_1$ is expressed in a data format of float32. For example, in the initial homography transformation matrix $H_1$,$h_{11}$ is 5.0 in a decimal notation, and a corresponding binary notation may be 101.0, which is equivalent to $1.01 \times 2^2$. In this case, the data format of float32 is expressed as 00111110001000000000000000000000. In other words, 5.0 in the decimal notation occupies 32 bits when being represented in the data format of float32, wherein a highest 1 bit is a sign bit (that is, 0, corresponding to a positive number), next 8 bits are the exponent (that is, 01111100, corresponding to 2), and remaining 23 bits are the significand (that is, 01000000000000000000000, corresponding to 01).

It may be understood that decimal data may be converted to corresponding binary data by using an existing conversion method, and each matrix may be described below by using the decimal data.

In this embodiment of this disclosure, description is made in detail by using an example in which the following decimal matrix is used as $H_1$.

$$H_1 = \begin{bmatrix} 485.9 & 374.9 & 8201.3 \\ 0 & 221.8 & 8120.2 \\ 0.4 & 0.2 & 69.8 \end{bmatrix}$$

In the foregoing example, when the initial element in $H_1$ is represented in the data format of float32, the first byte count occupied thereby is 4, and correspondingly, a first bit count occupied thereby is 32.

S103: Quantizing the initial element in the initial homography transformation matrix to generate a quantized homography transformation matrix.

A quantized element in the quantized homography transformation matrix occupies a second byte count of bytes, and the second byte count is less than the first byte count.

The quantized homography transformation matrix is represented by using $H_2$, as shown below:

$$H_2 = \begin{bmatrix} h`_{11} & h`_{12} & h`_{13} \\ h`_{21} & h`_{22} & h`_{23} \\ h`_{31} & h`_{32} & h`_{33} \end{bmatrix}$$

Specifically, after the initial homography transformation matrix $H_1$ is obtained, the initial element in the initial homography transformation matrix $H_1$ may be quantized into the quantized element that occupies the second byte count of bytes, so that the initial homography transformation matrix $H_1$ is finally quantized into the quantized homography transformation matrix $H_2$. In other words, quantities of bytes of $h'_{11}, h'_{12}, h'_{13}, ...,$ and $h'_{33}$ are all the second byte count. The second byte count is determined by a data format of the quantized element.

In some examples, the data format of the quantized element may be int8. That is, the initial element is quantized in the data format of int8, so as to generate the quantized homography transformation matrix $H_2$. The second byte count occupied by the quantized element in the quantized homography transformation matrix $H_2$ is 1. In other words, the quantized element occupies 8 bits.

For example, the initial homography transformation matrix $H_1$ is quantized in the data format of int8 to obtain the following quantized homography transformation matrix $H_2$ represented in decimal:

$$H_2 = \begin{bmatrix} 15 & 12 & 225 \\ 0 & 7 & 252 \\ 0 & 0 & 2 \end{bmatrix}$$

In some other examples, the data format of the quantized element may be int16. That is, the initial element is quantized in the data format of int16, so as to generate the quantized homography transformation matrix $H_2$. The second byte count occupied by the quantized element in the quantized homography transformation matrix $H_2$ is 2. In other words, the quantized element occupies 16 bits.

For example, the initial homography transformation matrix $H_1$ is quantized in the data format of int16 to obtain the following quantized homography transformation matrix $H_2$ represented in decimal:

$$H_2 = \begin{bmatrix} 3887 & 2999 & 65535 \\ 0 & 1774 & 64961 \\ 0 & 0 & 558 \end{bmatrix}$$

It should be noted that in this embodiment of this disclosure, the initial elements may also be quantized in other data formats, and the data formats for quantizing the initial element are not limited herein, provided that it ensures that the second byte count occupied by the quantized element in the generated quantized homography transformation matrix is less than the first byte count. Accordingly, a second bit count is less than the first bit count.

S105: Generating a coordinate mapping matrix based on the quantized homography transformation matrix.

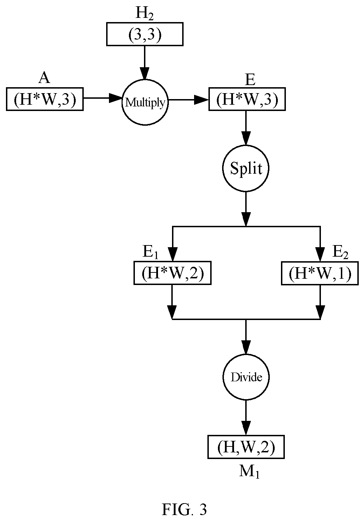

FIG. 3 is a block diagram of a flow of generating a coordinate mapping matrix in a homography transformation-based image data processing method according to an exemplary embodiment of this disclosure. As shown in FIG. 3, specifically, in this embodiment of this disclosure, a coordinate mapping matrix $M_1$ may be generated based on the quantized homography transformation matrix $H_2$ and a homography transformation constant (also referred to as a grid). To distinguish from a homography transformation constant in the following examples, the homography transformation constant in this example may be a first homography transformation constant (which may be represented by using A below). The first homography transformation constant A may be a matrix of (H * W, 3). It may be understood that H represents a quantity of rows in output data, W represents a quantity of columns in the output data, and 3 refers to that there are three values at a position in a certain row and a certain column. Therefore, H and W may be determined when demand for the output data is given.

For example, when the required output data has 3 rows and 3 columns, that is, H=3 and W=3, the first homography transformation constant A is a matrix of (3 * 3, 3). To be specific, the first homography transformation constant A may be understood as a matrix with 9 rows and 3 columns. Certainly, the first homography transformation constant A (3 * 3, 3) may also be understood as a matrix with 3 rows and 3 columns. Each position in the matrix has three values, which may be expressed as:

$$A = \begin{bmatrix} (0,0,1) & (1,0,1) & (2,0,1) \\ (0,1,1) & (1,1,1) & (2,1,1) \\ (0,2,1) & (1,2,1) & (2,2,1) \end{bmatrix}$$

A first value at a position in the first homography transformation constant A is a quantity of columns in a matrix where that position is located, a second value is a quantity of rows in the matrix where that position is located, and a third value is a completion value 1, so that the values at each position are multiplied by the homography transformation matrix (3, 3).

In this embodiment of this disclosure, the specific process of generating the coordinate mapping matrix $M_1$ based on the quantized homography transformation matrix $H_2$ may be as follows.

First, an intermediate homography transformation matrix may be generated based on the quantized homography transformation matrix $H_2$ and the first homography transformation constant A. For example, the quantized homography transformation matrix $H_2$ may be multiplied by the first homography transformation constant A to obtain the intermediate homography transformation matrix (H*W, 3).

For example, after the quantized homography transformation matrix $H_2$ that is quantized in the data format of int8 is multiplied by the first homography transformation constant A, the intermediate homography transformation matrix E obtained is as follows:

$$E = \begin{bmatrix} (255,252,2) & (255,252,2) & (255,252,2) \\ (255,255,2) & (255,255,2) & (255,255,2) \\ (255,255,2) & (255,255,2) & (255,255,2) \end{bmatrix}$$

Subsequently, the coordinate mapping matrix M is generated based on the intermediate homography transformation matrix E. For example, two intermediate sub-matrices may be determined based on the intermediate homography transformation matrix E. A first sub-matrix $E_1$ in the two intermediate sub-matrices is represented by using (H * W, 2), and a second sub-matrix $E_2$ is represented by using (H * W, 1). Subsequently, the first sub-matrix $E_1$ is divided by the second sub-matrix $E_2$ to finally obtain the coordinate mapping matrix M (H, W, 2).

For example, the first sub-matrix $E_1$ obtained by splitting the intermediate homography transformation matrix E specifically is:

$$E_1 = \begin{bmatrix} (255, 252) & (255, 252) & (255, 252) \\ (255, 255) & (255, 255) & (255, 255) \\ (255, 255) & (255, 255) & (255, 255) \end{bmatrix}$$

The second sub-matrix $E_2$ specifically is:

$$E_2 = \begin{bmatrix} 2 & 2 & 2 \\ 2 & 2 & 2 \\ 2 & 2 & 2 \end{bmatrix}$$

The coordinate mapping matrix $M_1$ obtained by dividing $E_1$ by $E_2$ is as follows:

$$M_1 = \begin{bmatrix} (128, 126) & (128, 126) & (128, 126) \\ (128, 128) & (128, 128) & (128, 128) \\ (128, 128) & (128, 128) & (128, 128) \end{bmatrix}$$

It should be noted that, because the specific process and operational details of generating the coordinate mapping matrix $M_1$ may be directly referred to relevant content in the existing technology, details are not described herein.

S107: Determining target image data in a second angle of view based on the initial image data and the coordinate mapping matrix.

For example, after the coordinate mapping matrix $M_1$ is determined, an index value in the data may be input based on the coordinate mapping matrix $M_1$ to finally obtain the output data. In this case, the input data is converted into the output data in another angle of view through the homography transformation-based image data processing method in this embodiment of this disclosure. It may be understood that the input data may include poses of a plurality of sampling points in the initial image data in the first angle of view (such as coordinate values in a pixel coordinate system) and image data in those poses. For example, as shown in FIG. 1, the initial image data has four sampling points P, Q, R, and S. The input data includes coordinate values of the sampling points P, Q, R, and S in the pixel coordinate system and image data respectively corresponding to the points.

In addition, the output data includes poses of the sampling points in the corresponding initial image data in the target image data in the second angle of view and the target image data. For example, the output data includes coordinate values of the sampling points P, Q, R, and S in the second angle of view and the image data of the sampling points, so that the target image data in the second angle of view is determined. In other words, the initial image data in the first angle of view is transformed into the target image data in the second angle of view through the coordinate mapping matrix that is generated based on the homography transformation matrix.

It should be noted that, because the specific process of inputting the index value in the data based on the coordinate mapping matrix $M_1$ may be directly referred to relevant content in the existing technology, details are not described herein.

In view of the above, it may be learned that according to the homography transformation-based image data processing method in the embodiment of this disclosure, in the initial homography transformation matrix, the initial element occupying the first byte count is quantized into the quantized element occupying the second byte count of bytes, that is, the initial homography transformation matrix formed by the initial elements (occupying the first byte count) is quantized into the quantized homography transformation matrix formed by quantized elements (less than the first byte count), so as to reduce the space occupied by the quantized elements in the quantized homography transformation matrix. Subsequently, the coordinate mapping matrix is generated based on the quantized homography transformation matrix. Finally, the target image data in the second angle of view is generated based on the coordinate mapping matrix and the initial image data in the first angle of view.

Compared to related technologies of generating a coordinate mapping matrix based on a homography transformation matrix formed by initial elements occupying a first byte count (such as 4, corresponding to the data format of float32), in this embodiment of this disclosure, the initial homography transformation matrix occupying the first byte count is quantized to generate the quantized homography transformation matrix. The quantized element in the quantized homography matrix occupies the second byte count of bytes, which is smaller than the first byte count. Subsequently, the quantized homography matrix with a smaller count of quantized bytes is used to generate the coordinate mapping matrix, and then the target image data in the second angle of view is determined based on the initial image data and the coordinate mapping matrix. On one hand, space occupied by the quantized homography transformation matrix is saved; and on the other hand, a generation speed of the coordinate mapping matrix is improved, thereby improving overall efficiency of a homography transformation-based image data processing process.

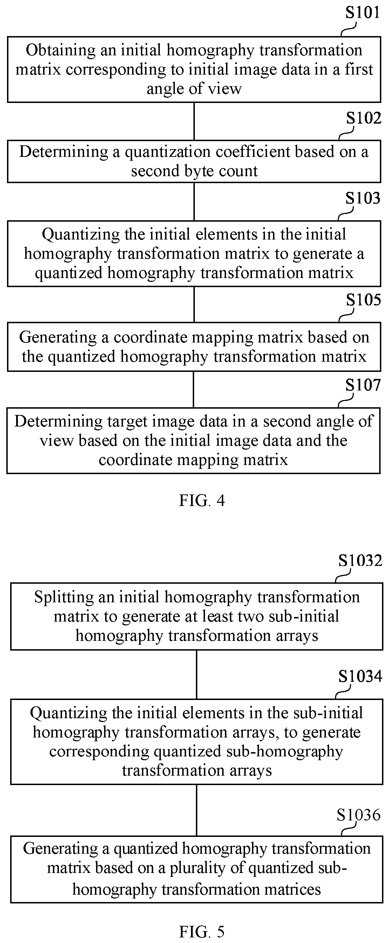

FIG. 4 is another schematic flowchart of a homography transformation-based image data processing method according to an exemplary embodiment of this disclosure. As shown in FIG. 4, in a feasible implementation, in the homography transformation-based image data processing method in this embodiment of this disclosure, before the quantizing an initial element in the initial homography transformation matrix to generate a quantized homography transformation matrix, the following step may also be included.

S102: Determining a quantization coefficient based on the second byte count.

As described above, the second byte count is determined by the data format of the quantized element, that is, is determined by a manner of quantizing the initial element. For example, when the initial element is quantized in the data format of int8, in the generated quantized homography transformation matrix $H_2$, if the second byte count occupied by the quantized element is 1 and the second bit count is 8, the corresponding quantization coefficient may be determined based on the second byte count. Subsequently, the initial elements may be quantized by using the quantization coefficient to obtain the corresponding quantized elements, so as to form the quantized homography transformation matrix $H_2$.

For example, specific steps of determining the quantization coefficient based on the second byte count are as follows.

S1021: Determining a quantization representation range based on the second byte count.

For example, if an initial element is quantized in the data format of int8, that is, the second byte count is 1, it is determined that the quantization representation range is 0~255. If the initial element is quantized in the data format of int16, that is, the second byte count is 2, it is determined that the quantization representation range is 0~65535.

It should be noted that actually, after the data format is determined, a count of bytes occupied by data represented by that data format is determined, and accordingly, a maximum value and a minimum value of the data represented by that data format may be obtained, so as to determine the quantization representation range in that data format.

S1022: Determining an actual numerical range based on a maximum initial element and a minimum initial element in the initial homography transformation matrix.

For example, in the initial homography transformation matrix $H_1$, if $h_{11}$ represents the maximum initial element and $h_{12}$ represents the minimum initial element, it is determined that the actual numerical range of the initial homography transformation matrix $H_1$ is $h_{12}$~$h_{11}$. Taking the foregoing specific example of $H_1$ as an example, if 8201.3 is the maximum initial element of $H_1$ and 0 is the minimum initial element of $H_1$, in this example, the actual numerical range of $H_1$ is 0~8201.3.

S1023: Determining the quantization coefficient based on the quantization representation range and the actual numerical range.

In some examples, the quantization coefficient (which may be represented by using *a* below) may be a ratio of a width of the quantization representation range to a width of the actual numerical range. The width of the quantization representation range is a difference between an upper limit value and a lower limit value of the quantization representation range. For example, if the initial element is quantized in the data format of int8, that is, the second byte count is 1, and it is determined that the quantization representation range is 0~255, the width of the quantization representation range is 255-0=255.

For another example, if the initial element is quantized in the data format of int16, that is, the second byte count is 2, and it is determined that the quantization representation range is 0~65535, the width of the quantization representation range is 65535-0=65535.

In addition, the width of the actual numerical range may be a difference between an upper limit value and a lower limit value of the actual numerical range. For example, if the actual numerical range of the initial homography transformation matrix $H_1$ is $h_{12}$~$h_{11}$, the width of the actual numerical range is $h_{11}$ - $h_{12}$. For example, taking the foregoing specific example of the initial homography transformation matrix $H_1$ as an example, the width of the actual numerical range of $H_1$ is 8201.3.

Taking the foregoing specific example of the initial homography transformation matrix $H_1$ as an example again, when it is needed to quantize the initial element in the initial homography matrix $H_1$ in the data format of int8, the quantization coefficient (which may be represented by using a1 below) may be (8201.3-0)/255=32.1.

When it is needed to quantize initial elements in the initial homography matrix $H_1$ in the data format of int16, the quantization coefficient (which may be represented by using a2 below) may be (8201.3-0)/65535=0.125.

Certainly, in other examples, the quantization coefficient may also be obtained by other operations for the width of the quantization representation range and the width of the actual numerical range. The manner of determining the quantization coefficient is not limited herein.

After the quantization coefficient $a$ is determined, in this embodiment of this disclosure, the initial elements in the initial homography transformation matrix $H_1$ may be quantized based on the quantization coefficient $a$, to generate the quantized homography transformation matrix $H_2$.

Specifically, during quantization of the initial element in the initial homography transformation matrix $H_1$, in some examples, a formula $(h - h\text{min})/a$ may be adopted to obtain the corresponding quantized element $h'$ in the quantized homography transformation matrix $H_2$, wherein 4 represents the initial element and $h\text{min}$ represents the minimum value among the initial elements. To be specific, it is satisfied that $h'_{11} = (h_{11} - h_{min})/a$, $h'_{12} = (h_{12} - h_{min})/a$, ..., and $h'_{33} = (h_{33} - h_{min})/a$.

The initial homography transformation matrix $H_1$ is quantized in the data format of int8 to generate the corresponding quantized element in the quantized homography transformation matrix $H_2$. To be specific, it is satisfied that $h'_{11} = (h_{11} - h_{min})/a1$, $h'_{12} = (h_{12} - h_{min})/a1$, ..., and $h'_{33} = (h_{33} - h_{min})/a1$. The initial homography transformation matrix $H_1$ is quantized in the data format of int16 to generate the corresponding quantized element in the quantized homography transformation matrix $H_2$. To be specific, it is satisfied that $h'_{11} = (h_{11} - h_{min})/a2$, $h'_{12} = (h_{12} - h_{min})/a2$, ..., and $h'_{33} = (h_{33} - h_{min})/a2$.

For example, the initial homography transformation matrix $H_1$ is quantized in the data format of int8 to obtain the following quantized homography transformation matrix $H_2$ represented in decimal:

$$H_2 = (H_1 - H_{1min})/a1 = \begin{bmatrix} 15 & 12 & 255 \\ 0 & 7 & 252 \\ 0 & 0 & 2 \end{bmatrix}$$

Each data point in $H_{1min}$ is the minimum value in $H_1$. For example,

$$H_{1min} = \begin{bmatrix} 0 & 0 & 0 \\ 0 & 0 & 0 \\ 0 & 0 & 0 \end{bmatrix}.$$

For another example, the initial homography transformation matrix $H_1$ is quantized in the data format of int16 to obtain the following quantified homography transformation matrix $H_2$ represented in decimal:

$$H_2 = (H_1 - H_{1min})/a2 = \begin{bmatrix} 3887 & 2999 & 65535 \\ 0 & 1774 & 64961 \\ 0 & 0 & 558 \end{bmatrix}$$

It should be noted that in other examples, other operations may also be performed on the quantization coefficient $a$ and the initial element in the initial homography transformation matrix $H_1$ to generate the corresponding quantized element in the quantized homography transformation matrix $H_2$. A calculation manner for the quantized element is not limited herein.

It may be understood that in the foregoing examples, after the initial homography transformation matrix $H_1$ is obtained, initial elements in the initial homography transformation matrix $H_1$ may be directly quantized. To be specific, in step 102, there is no need to perform any other processing on the initial homography matrix $H_1$, and the initial elements in the initial homography matrix $H_1$ are quantized directly to generate the quantized homography transformation matrix $H_2$.

In some embodiments, directly quantizing the initial homography transformation matrix $H_1$ may easily cause precision losses to the generated quantized homography transformation matrix $H_2$. For example, the quantized homography transformation matrix $H_2$ may be dequantized to observe losses during the quantization process. For example, an operation may be performed on a quantized element $h'$ in the quantized homography transformation matrix $H_2$ according to a dequantization formula $h' * a + h\text{min}$, to obtain a dequantized element $h_3$ in a dequantization matrix $H_3$. That is, $h_3 = h' * a + h\text{min}$. In view of the above, $h\text{min}$ represents the minimum value among the initial elements.

The following dequantization matrix $H_3$ is obtained by dequantizing the quantized homography transformation matrix $H_2$ that is quantized in the data format of int8:

$$H_3 = \begin{bmatrix} 482.4 & 385.9 & 8200.8 \\ 0 & 225.1 & 8104.3 \\ 0 & 0 & 64.32 \end{bmatrix}$$

By comparing $H_3$ with the initial homography transformation matrix $H_1$, it is found that $h_{31}$ and $h_{32}$ are originally 0.4 and 0.2 in $H_1$, but now both $h_{31}$ and $h_{32}$ in $H_3$ have become 0, resulting in a precision loss of (0.4-0)/0.4=100%. In this way, precision of the coordinate mapping matrix obtained based on the quantized homography transformation matrix $H_2$ is affected correspondingly, thereby affecting accuracy of the finally determined target image data in the second angle of view.

FIG. 5 is a flowchart of generating a quantized homography transformation matrix in a homography transformation-based image data processing method according to an exemplary embodiment of this disclosure. As shown in FIG. 5, to resolve the foregoing problem, in some other examples, S103 of quantizing the initial elements in the initial homography transformation matrix to generate a quantized homography transformation specifically includes the following steps.

S1032: Splitting the initial homography transformation matrix to generate at least two sub-initial homography transformation arrays.

Specifically, the initial homography transformation matrix $H_1$ is split to generate a plurality of sub-initial homography transformation arrays $H_{1a}$. The number of the sub-initial homography transformation arrays $H_{1a}$ may be any integer from 2 to 9. For example, the initial homography transformation matrix $H_1$ may be split to generate 2, 4, 6, 8, or 9 sub-initial homography transformation arrays $H_{1a}$.

For example, a plurality of sub-initial homography transformation arrays $H_{1a}$ may be determined based on the initial homography transformation matrix $H_1$. Any row of initial elements in each sub-initial homography transformation array $H_{1a}$ contains at least some of initial elements in at least one row of initial elements in the initial homography transformation matrix $H_1$, and a column sequence of the at least some of the initial elements contained in each sub-initial homography transformation array $H_{1a}$ is same as that in the initial homography transformation matrix $H_1$. Moreover, when each sub-initial homography transformation array $H_{1a}$ includes at least two rows of initial elements, two adjacent rows of initial elements are also adjacent in the initial homography transformation matrix $H_1$.

Similarly, any column of initial elements in each sub-initial homography transformation array $H_{1a}$ contains at least some of initial elements in at least one column of initial elements in the initial homography transformation matrix $H_1$, and a row sequence of the at least some of the initial elements contained in each sub-initial homography transformation array $H_{1a}$ is same as that in the initial homography transformation matrix $H_1$. Moreover, when each sub-initial homography transformation array $H_{1a}$ includes at least two columns of initial elements, two adjacent columns of initial elements are also adjacent in the initial homography transformation matrix $H_1$.

It should be noted that each of the initial elements in the initial homography transformation matrix $H_1$ is in one sub-initial homography transformation array $H_{1a}$.

For example, the initial homography transformation matrix $H_1$ may be split along a column direction thereof to generate at least two sub-initial homography transformation arrays $H_{1a}$. The at least two the sub-initial homography transformation arrays $H_{1a}$ include a first sub-initial homography transformation array $H_{11}$ and a second sub-initial homography transformation array H12.

For example, at least two sub-initial homography transformation arrays $H_{1a}$ may be determined based on initial elements row in the initial homography transformation matrix $H_1$. Each sub-initial homography transformation array $H_{1a}$ contains at least one row of initial element rows in the initial homography transformation matrix $H_1$. Moreover, two adjacent initial element rows contained in a same sub-initial homography transformation array $H_{1a}$ are adjacent in the initial homography transformation matrix $H_1$, and initial element rows contained in different sub-initial homography transformation arrays $H_{1a}$ are not repeated. Moreover, all initial element rows in the initial homography transformation matrix $H_1$ are in one sub-initial homography transformation array $H_{1a}$. In other words, initial element rows in the first sub-initial homography transformation array $H_{11}$ are determined based on some of the initial element rows in the initial homography transformation matrix $H_1$, and initial elements row in the second sub-initial homography transformation array $H_{12}$ are determined based on some other of the initial element rows in the initial homography transformation matrix $H_1$.

An example is made below in which the initial homography transformation matrix $H_1$ is split along the column direction thereof to generate two sub-initial homography transformation arrays $H_{1a}$, which respectively are the first sub-initial homography transformation array $H_{11}$ and the second sub-initial homography transformation array $H_{12}$.

For example, initial element rows in the first sub-initial homography transformation array $H_{11}$ are determined based on a first row and a second row of initial element rows in the initial homography transformation matrix $H_1$, and initial element rows in the second sub-initial homography transformation array $H_{12}$ are determined based on a third row of initial element row in the initial homography transformation matrix $H_1$.

For example, the first sub-initial homography transformation array $H_{11}$ may be an array with two rows and three columns, that is, $H_{11}$ (2, 3) may be specifically expressed as:

$$H_{11=}\begin{bmatrix} m_{11} & m_{12} & m_{13} \\ m_{21} & m_{22} & m_{22} \end{bmatrix}$$

$H_{11}$ may be an array formed by the first and second rows of the initial homography transformation matrix $H_1$, that is, $m_{11} = h_{11}$, $m_{12} = h_{12}$, $m_{13} = h_{13}$, $m_{21} = h_{21}$, $m_{22} = h_{22}$, and $m_{23} = h_{23}$.

The second sub-initial homography transformation array $H_{12}$ may be an array with one row and three columns, that is, $H_{12}$ (1, 3) may be specifically expressed as:

$H_{12=}[m_{11}\ m_{12}\ m_{13}]$

$H_{12}$ may be an array formed by the third row of the initial homography transformation matrix $H_1$, that is, $m_{11} = h_{31}$, $m_{12} = h_{32}$, and $m_{13} = h_{33}$.

Taking the initial homography transformation matrix $H_1$ as an example again, the initial homography transformation matrix $H_1$ is split as described above, and the first sub-initial homography transformation array $H_{11}$ (2, 3) obtained is specifically as below:

$$H_{11=}\begin{bmatrix} 485.9 & 374.9 & 8201.3 \\ 0 & 221.8 & 8120.2 \end{bmatrix}$$

The second sub-initial homography transformation array $H_{12}$ (3, 1) is specifically as below:

$$H_{12=}[0.4\quad 0.2\quad 69.8]$$

S1034: Quantizing the initial elements in the sub-initial homography transformation arrays, to generate corresponding quantized sub-homography transformation arrays.

Specifically, after S1032 is completed, initial elements in the sub-initial homography transformation arrays $H_{1a}$ may be quantized, so as to generate a corresponding quantized sub-homography transformation array $M_{1a}$.

It may be understood that similar to the foregoing process of quantizing the initial elements in the initial homography transformation matrix H, in some examples, before quantizing initial elements in the sub-initial homography transformation arrays $H_{1a}$ to generate corresponding quantized sub-homography transformation arrays, the following steps may be included.

S1031a: Determining a quantization representation range based on the second byte count.

For example, if an initial element is quantized in the data format of int8, that is, the second byte count is 1, it is determined that the quantization representation range is 0~255. If each initial element is quantized in the data format of int16, that is, the second byte count is 2, it is determined that the quantization representation range is 0~65535.

In view of the above, after the data format for quantization is determined, a count of bytes occupied by data (that is, a quantized element) represented in that data format is determined, and accordingly, a maximum value and a minimum value of the data represented in that data format may be obtained, so as to determine the quantization representation range in that data format.

In some examples, formats of quantized elements of the sub-initial homography transformation arrays $H_{1a}$ may be consistent. That is, the sub-initial homography transformation arrays $H_{1a}$ are quantized in a same data format to generate corresponding quantized sub-homography transformation arrays $H_{2a}$. Moreover, the quantized elements in all quantized sub-homography transformation arrays $H_{2a}$ have a same data format. In this way, in this example, quantization representation ranges of all sub-initial homography transformation arrays $H_{1a}$ are same.

For example, if sub-initial homography transformation arrays $H_{1a}$ are quantized in the data format of int8, that is, initial elements in the sub-initial homography transformation arrays $H_{1a}$ are quantized in the data format of int8, to generate the corresponding quantized sub-homography transformation array $H_{2a}$, the quantization representation ranges for quantizing the sub-initial homography transformation arrays $H_{1a}$ are all 0~255.

In some other examples, formats of quantized elements of the sub-initial homography transformation arrays $H_{1a}$ may not be consistent. For example, at least one sub-initial homography transformation array $H_{1a}$ is quantized in one data format (such as int8) to generate a corresponding quantized sub-homography transformation array $H_{2a}$, and at least one other sub-initial homography transformation array $H_{1a}$ is quantized in another data format (such as int16) to generate a corresponding quantized sub-homography transformation array $H_{2a}$. In this case, in this example, the quantization representation ranges are different when the sub-initial homography transformation arrays $H_{1a}$ are quantized in different data formats.

For example, at least one of the sub-initial homography transformation arrays $H_{1a}$ is quantized in the data format of int8, that is, initial elements in the one sub-initial homography transformation array $H_{1a}$ are quantized in the data format of int8, and the quantization representation range thereof is 0~255. For example, the first sub-initial homography transformation array $H_{11}$ is quantized in the data format of int8, that is, the initial elements in the first sub-initial homography

transformation array $H_{11}$ are quantized in the data format of int8, and the quantization representation range thereof is 0~255.

At least another sub-initial homography transformation array $H_{1a}$ is quantized in the data format of int16, that is, initial elements in this sub-initial homography transformation array $H_{1a}$ are quantized in the data format of int16, and the quantization representation range thereof is 0~65535. For example, the second sub-initial homography transformation array $H_{12}$ is quantized in the data format of int16, and the quantization representation range thereof is 0~65535.

S1031b: Determining a sub-actual numerical range for the sub-initial homography transformation arrays based on a maximum initial element and a minimum initial element in the sub-initial homography transformation arrays $H_{1a}$.

For example, in the first sub-initial homography transformation array $H_{11}$, if $m_{11}$ represents the maximum initial element and $m_{12}$ represents the minimum initial element, it is determined that the sub-actual numerical range of the first sub-initial homography transformation array $H_{11}$ is $m_{12}$~$m_{11}$. For example, in the first sub-initial homography transformation array $H_{11}$, if 8201.3 is the maximum initial element of $H_{11}$ and 0 is the minimum initial element of $H_{11}$, in this example, the sub-actual numerical range of $H_{11}$ is 0~8201.3.

In the second sub-initial homography transformation array $H_{12}$, if $m_{11}$ represents the maximum initial element and $m_{13}$ represents the minimum initial element, it is determined that the sub-actual numerical range of the second sub-initial homography transformation array $H_{12}$ is $m_{11}$~$m_{13}$. For example, in the second sub-initial homography transformation array $H_{12}$, if 69.8 is the maximum initial element of $H_{12}$ and 0.2 is the minimum initial element of $H_{12}$, in this example, the sub-actual numerical range of $H_{12}$ is 0.2~69.8.

S1031c: Determining a sub-quantization coefficient for sub-initial homography transformation arrays $H_{1a}$ based on the quantization representation range and the sub-actual numerical range.

In some examples, the sub-quantization coefficient (which may be represented by using $b$ below) may be a ratio of the width of the quantization representation range to a width of the sub-actual numerical range.

The width of the quantization representation range is the difference between the upper limit value and the lower limit value of the quantization representation range. For example, if an initial element in the corresponding sub-initial homography transformation array $H_{1a}$ is quantized in the data format of int8, that is, the second byte count is 1, and it is determined that the quantization representation range is 0~255, the width of the quantization representation range is 255-0=255. For another example, if initial elements in the corresponding sub-initial homography transformation array $H_{1a}$ are quantized in the data format of int16, that is, the second byte count is 2, and it is determined that the quantization representation range is 0~65535, the width of the quantization representation range is 65535.

In addition, the width of the sub-actual numerical range may be a difference between an upper limit value and a lower limit value of the sub-actual numerical range. For example, if the actual numerical range of the first sub-initial homography transformation array $H_{11}$ is $m_{12}$~$m_{11}$, the width of the sub-actual numerical range of the first sub-initial homography transformation array $H_{11}$ is $m_{11} - m_{12}$. For example, the width of the sub-actual numerical range of the first sub-initial homography transformation array $H_{11}$ is 8201.3.

In this way, when it is needed to quantize initial elements in the first sub-initial homography transformation array $H_{11}$ in the data format of int8, the sub-quantization coefficient $b$ (such as $b1$) may be (8201.3-0)/255=32.1. When it is needed to quantize initial elements in the second sub-initial homography transformation array $H_{12}$ in the data format of int8, the sub-quantization coefficient $b$ (such as $b2$) may be (69.8-0.2)/255=0.27.

Similarly, when it is needed to quantize initial elements in the first sub-initial homography transformation array $H_{11}$ in the data format of int16, a sub-quantization coefficient $b1'$ may be (8201.3-0)/65535=0.13. When it is needed to quantize initial elements in the second sub-initial homography transformation array $H_{12}$ in the data format of int16, a sub-quantization coefficient $b2'$ may be (69.8-0.2)/65535=0.001.

Certainly, in other examples, the sub-quantization coefficient may also be obtained by other operations (such as a weighted average and a variance) for the width of the quantization representation range and the width of the sub-actual numerical range. The manner of calculating the quantization coefficient is not limited herein.

After the sub-quantization coefficient $b$ of sub-initial homography transformation arrays $H_{1a}$ is determined, in the embodiments of this disclosure, initial elements in the sub-initial homography transformation arrays $H_{1a}$ may be quantized based on the sub-quantization coefficient $b$, to generate the corresponding quantized sub-homography transformation array $H_{2a}$.

For example, the first sub-initial homography transformation array $H_{11}$ is quantized to generate a first quantized sub-homography transformation array $H_{21}$. Specifically, the initial elements in the first sub-initial homography transformation array $H_{11}$ are quantized to obtain each corresponding quantized element in the first quantized sub-homography transformation array $H_{21}$. In other words, quantized elements in the first quantized sub-homography transformation array $H_{21}$ are obtained by quantizing the corresponding initial element. $H_{21}$ may be specifically expressed as:

$$H_{21} = \begin{bmatrix} m'_{11} & m'_{12} & m'_{13} \\ m'_{21} & m'_{22} & m'_{22} \end{bmatrix}$$

For another example, the second sub-initial homography transformation array $H_{12}$ is quantized to generate a second quantized sub-homography transformation array $H_{22}$. Specifically, initial elements in the second sub-initial homography transformation array $H_{12}$ are quantized to obtain corresponding quantized elements in the second quantized sub-homography transformation array $H_{22}$. In other words, quantized elements in the second quantized sub-homography transformation array $H_{22}$ are obtained by quantizing the corresponding initial elements. $H_{22}$ may be specifically expressed as:

$$H_{22=}[m'_{11} \quad m'_{12} \quad m'_{13}]$$

Specifically, when quantizing initial elements in the sub-initial homography transformation arrays $H_{1a}$, in some examples, an initial element $h_{1a}$ in the corresponding sub-initial homography transformation array $H_{1a}$ may be calculated according to a formula $(h_{1a}-h_{1a}min)/b$ to obtain a corresponding quantized element $h_{2a}$ in a quantized sub-homography transformation matrix $H_{2a}$, that is, $h_{2a}=(h_{1a} - h_{1a}min)/b$. Correspondingly, $H_{2a}= (H_{1a} - H_{1amin})/b$. $h_{1a}min$ represents a minimum value of the initial elements in the sub-initial homography transformation array $H_{1a}$, and $H_{1amin}$ represents an array formed by $h_{1a}min$. In other words, all data in $H_{1amin}$ are $h_{1a}min$.

For example, the first sub-initial homography transformation array $H_{11}$ is quantized in the data format of int8 to obtain the following first quantized sub-homography transformation array $H_{21}$ represented in decimal:

$$H_{21} = (H_{11} - H_{11min})/b1 = \begin{bmatrix} 15 & 12 & 255 \\ 0 & 7 & 252 \end{bmatrix}$$

$H_{11min}$ represents an array formed by $h_{11}min$. In other words, all data in $H_{11min}$ are $h_{11}min$ (a minimum value of the initial elements in the first sub-initial homography transformation array $H_{11}$).

The second sub-initial homography transformation array $H_{12}$ is quantized in the data format of int8 to obtain the following second quantized sub-homography transformation array $H_{22}$ represented in decimal:

$$H_{22} = (H_{12} - H_{12min})/b2 = [1 \quad 0 \quad 258]$$

$H_{12min}$ represents an array formed by $h_{12}min$. In other words, all data in $H_{12min}$ are $h_{12}min$ (a minimum value of the initial elements in the second sub-initial homography transformation array $H_{12}$).

For another example, the first sub-initial homography transformation array $H_{11}$ is quantized in the data format of int16 to obtain the following first quantized sub-homography transformation array $H_{21}$ represented in decimal:

$$H_{21} = (H_{11} - H_{11min})/b1' = \begin{bmatrix} 3738 & 2884 & 63087 \\ 0 & 1706 & 62463 \end{bmatrix}$$

The second sub-initial homography transformation array $H_{12}$ is quantized in the data format of int16 to obtain the following second quantized sub-homography transformation array $H_{22}$ represented in decimal:

$$H_{22} = (H_{12} - H_{12min})/b2' = [200 \quad 0 \quad 69600]$$

S1036: Generating the quantized homography transformation matrix based on a plurality of quantized sub-homography transformation matrices.

Specifically, the quantized homography transformation matrix $H_2$ includes quantized sub-homography transformation arrays $H_{2a}$. For example, the quantized homography transformation matrix $H_2$ includes the first quantized sub-homography transformation array $H_{21}$ and the second quantized sub-homography transformation array $H_{22}$.

It may be understood that a sub-initial homography transformation array $H_{1a}$ is determined through the initial homography transformation matrix $H_1$. The sub-initial homography transformation array $H_{1a}$ is quantized separately, so that precision of the quantized homography transformation matrix $H_2$ that is finally generated is improved, and even the precision is not damaged during the process of quantizing the initial homography transformation matrix $H_1$.

For example, the first quantized sub-homography transformation array $H_{21}$ and the second quantized sub-homography transformation array $H_{22}$ that are obtained through quantization in the data format of int8 may be dequantized respectively, and two dequantized sub-arrays obtained through dequantization may be concatenated in columns. A concatenated matrix may be compared with the initial homography transformation matrix $H_1$ to analyze a precision loss.

For example, a quantized element $h_{21a}$ in the first quantized sub-homography transformation array $H_{21}$ may be calculated according to a dequantization formula $h_{21a}*b1+h_{11}min$ to obtain a dequantized element $h_4$ in a dequantization

array $H_4$, that is, $h_4=h_{21a}*b1+h_{11}$min. The finally obtained dequantization array $H_4$ is as follows:

$$\begin{bmatrix} 481.5 & 385.2 & 8185.5 \\ 0 & 224.7 & 8089.2 \end{bmatrix}$$

Similarly, a quantized element $h_{22a}$ in the second quantized sub-homography transformation array $H_{22}$ may be calculated according to a dequantization formula $h_{22a}*b2+h_{12}$min to obtain a dequantized element $h_5$ in a dequantization array $H_5$, that is, $h_5=h_{22a}*b2+h_{12}$min. The finally obtained dequantization array $H_5$ is as follows:

$$\begin{bmatrix} 0.46 & 0.2 & 69.86 \end{bmatrix}$$

Subsequently, the dequantization array $H_4$ and the dequantization array $H_5$ are concatenated by using an inverse process of the method for splitting the initial homography transformation matrix $H_1$, to obtain the following matrix $H_6$:

$$\begin{bmatrix} 481.5 & 385.2 & 8185.5 \\ 0 & 224.7 & 8089.2 \\ 0.46 & 0.2 & 69.86 \end{bmatrix}$$

By comparing the matrix $H_6$ with the initial homography transformation matrix $H_1$, it may be learned that there is no loss in precision.

After the quantized homography transformation matrix $H_2$ is generated based on a plurality of quantized sub-homography transformation arrays $H_{2a}$, that is, after step S2036 is completed, the following step may be included.

S205: Generating a coordinate mapping matrix M based on a plurality of quantized sub-homography transformation arrays $H_{2a}$ in a quantized homography transformation matrix $H_2$.

It may be learned from the foregoing examples that, the initial homography transformation matrix $H_1$ is split into a plurality of sub-initial homography transformation arrays $H_{1a}$. For example, by splitting the initial homography transformation matrix $H_1$ into the first sub-initial homography transformation array $H_{11}$ and the second sub-initial homography transformation array $H_{12}$ along the column direction, and quantizing the first sub-initial homography transformation array $H_{11}$ and the second sub-initial homography transformation array $H_{12}$ respectively, the generated first quantized sub-homography transformation array $H_{21}$ and second quantized sub-homography transformation array $H_{22}$ have no precision loss. In this case, accuracy of the generated coordinate mapping matrix is improved, so that accuracy of the output data, that is, the target image data is improved.

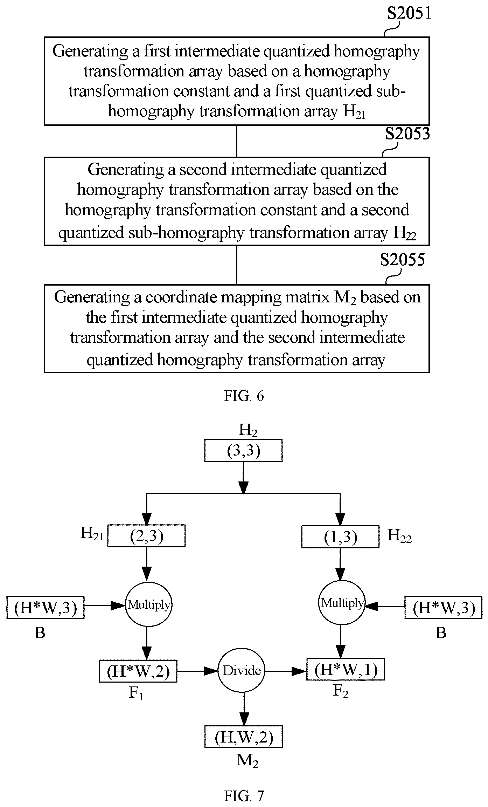

FIG. 6 is another flowchart of generating a coordinate mapping matrix in a homography transformation-based image data processing method according to an exemplary embodiment of this disclosure. FIG. 7 is a flowchart corresponding to FIG. 6. As shown in FIG. 6 and FIG. 7, in a feasible embodiment, S205 may specifically include the following steps.

S2051: Generating a first intermediate quantized homography transformation array based on a homography transformation constant and a first quantized sub-homography transformation array $H_{21}$.

To distinguish from the first homography transformation constant A in the foregoing examples, the homography transformation constant in this example may be a second homography transformation constant (which may be represented by using B).

In some optional examples, the first quantized sub-homography transformation array $H_{21}$ may be multiplied with the second homography transformation constant B to generate the first intermediate quantized homography transformation array. It may be understood that in the examples, the number of columns in the first quantized sub-homography transformation array $H_{21}$ needs to be equal to the number of rows in the second homography transformation constant B, so that the first quantized sub-homography transformation array $H_{21}$ can be multiplied with the second homography transformation constant B.

For example, if there are 3 columns in the first quantized sub-homography transformation array $H_{21}$ and 3 rows in the second homography transformation constant B, in the second homography transformation constant B (H * W, 3), it is satisfied that H=3 and W=3. The second homography transformation constant B may be expressed as:

$$B = \begin{bmatrix} (0,0,1) & (1,0,1) & (2,0,1) \\ (0,1,1) & (1,1,1) & (2,1,1) \\ (0,2,1) & (1,2,1) & (2,2,1) \end{bmatrix}$$

**EP 4 625 306 A1**

For example, after the first quantized sub-homography transformation array $H_{21}$ in the data format of int8 is multiplied with the second homography transformation constant B, a first intermediate quantized homography transformation array $F_1$ (H * W, 2) obtained is specifically as follows:

$$F_1 = \begin{bmatrix} (11,0) & (80,0) & (149,0) \\ (65,31) & (133,31) & (202,31) \\ (118,63) & (186,63) & (255,63) \end{bmatrix}$$

S2053: Generating a second intermediate quantized homography transformation array based on the homography transformation constant and a second quantized sub-homography transformation array $H_{22}$.

In some optional examples, the second quantized sub-homography transformation array $H_{22}$ may be multiplied with the homography transformation constant to generate the second intermediate quantized homography transformation array.

It may be understood that in the examples, the number of columns in the second quantized sub-homography transformation array $H_{22}$ needs to be equal to the number of rows in the homography transformation constant, so that it may be ensured that the second quantized sub-homography transformation array $H_{22}$ can be multiplied with the homography transformation constant B.

For example, if there are 3 columns in the second quantized sub-homography transformation array $H_{22}$ and 3 rows in the homography transformation constant, this homography transformation constant may be the second homography transformation constant B (3 * 3, 3).

Taking the second quantized sub-homography transformation array $H_{22}$ in the data format of int8 as an example again, after the second quantized sub-homography transformation array $H_{22}$ is multiplied with the second homography transformation constant B, a second intermediate quantized homography transformation array $F_2$ obtained is specifically as follows:

$$F_2 = \begin{bmatrix} (0) & (85) & (170) \\ (42) & (128) & (213) \\ (85) & (170) & (255) \end{bmatrix}$$

S2055: Generating a coordinate mapping matrix $M_2$ based on the first intermediate quantized homography transformation array and the second intermediate quantized homography transformation array.

In some feasible implementations, the coordinate mapping matrix $M_2$ may be obtained by dividing the first intermediate quantized homography transformation array by the second intermediate quantized homography transformation array.

For example, the coordinate mapping matrix $M_2$ finally obtained by dividing $F_1$ by $F_2$ is as follows:

$$M_2 = \begin{bmatrix} (117, 116) & (124, 116) & (130, 115) \\ (123, 119) & (126, 118) & (135, 118) \\ (128, 122) & (134, 121) & (140, 121) \end{bmatrix}$$

In addition, the process of generating the coordinate mapping matrix shown in FIG. 2 may be adopted to generate a coordinate mapping matrix $M_0$ based on the initial homography transformation matrix $H_1$ and the homography transformation constant (also referred to as a grid). Details are as follows:

$$M_0 = \begin{bmatrix} (117, 116) & (123, 115) & (129, 115) \\ (122, 119) & (128, 118) & (134, 117) \\ (127, 121) & (133, 121) & (139, 120) \end{bmatrix}$$

By respectively comparing $M_2$ and $M_1$ with $M_0$, it may be learned that $M_2$ is closer to $M_0$. It may be learned that, the first quantized sub-homography transformation array $H_{21}$ and the second quantized sub-homography transformation array $H_{22}$ with higher precision are generated by determining the first sub-initial homography transformation array $H_{11}$ and the second sub-initial homography transformation array $H_{12}$ based on the initial homography transformation matrix $H_1$, and quantizing the first sub-initial homography transformation array $H_{11}$ and the second sub-initial homography trans-

formation array $H_{12}$. Correspondingly, accuracy of the coordinate mapping matrix that is generated based on the first quantized sub-homography transformation array $H_{21}$ and the second quantized sub-homography transformation array $H_{22}$ is also improved.

In some other examples, the initial homography transformation matrix $H_1$ may be split into four sub-initial homography transformation arrays $H_{1a}$. In other words, the four sub-initial homography transformation arrays $H_{1a}$ may be determined based on the initial homography transformation matrix $H_1$.

In some examples, before quantizing the first sub-initial homography transformation array $H_{11}$ to generate the first quantized sub-homography transformation array $H_{12}$, the method may include: splitting the first sub-initial homography transformation array $H_{11}$ along a row direction thereof to generate a plurality of third sub-initial homography transformation arrays $H_{13}$.

For example, a plurality of third sub-initial homography transformation arrays $H_{13}$ may be determined based on initial element columns in the first sub-initial homography transformation array $H_{11}$. Each third sub-initial homography transformation array $H_{13}$ contains at least one column of initial element columns in the first sub-initial homography transformation array $H_{11}$, and two adjacent initial element columns contained in a same third sub-initial homography transformation array $H_{13}$ are adjacent in the first sub-initial homography transformation array $H_{11}$. Initial element columns contained in different third sub-initial homography transformation arrays $H_{13}$ are not repeated, and each of the initial element columns in the first sub-initial homography transformation array $H_{11}$ is in one third sub-initial homography transformation array $H_{13}$.

The plurality of third sub-initial homography transformation arrays $H_{13}$ may include a fourth sub-initial homography transformation array $H_{14}$ and a fifth sub-initial homography transformation array $H_{15}$. For example, initial element columns in the fourth sub-initial homography transformation array $H_{14}$ may be determined based on some of the initial element columns in the first sub-initial homography transformation array $H_{11}$, and initial element columns in the fifth sub-initial homography transformation array $H_{15}$ may be determined based on some other of the initial element columns in the first sub-initial homography transformation array $H_{11}$.

For example, the first sub-initial homography transformation array $H_{11}$ may be split into two third sub-initial homography transformation arrays $H_{13}$ along the row direction of the first sub-initial homography transformation array $H_{11}$, which respectively are the fourth sub-initial homography transformation array $H_{14}$ and the fifth sub-initial homography transformation array $H_{15}$.

In other words, initial element columns in the fourth sub-initial homography transformation array $H_{14}$ may be determined based on a first column and a second column of the initial element columns in the first sub-initial homography transformation array $H_{11}$, and initial element columns in the fifth sub-initial homography transformation array $H_{15}$ may be determined based on a third column of the initial element columns in the first sub-initial homography transformation array $H_{11}$.

For example, the fourth sub-initial homography transformation array $H_{14}$ may be an array with two rows and two columns, that is, $H_{14}$ (2, 2) may be specifically expressed as:

$$H_{14=}\begin{bmatrix} m_{11} & m_{12} \\ m_{21} & m_{22} \end{bmatrix}$$

The fifth sub-initial homography transformation array $H_{15}$ may be an array with two rows and one column, that is, $H_{15}$ (2, 1) may be specifically expressed as:

$$H_{15=}\begin{bmatrix} m_{13} \\ m_{23} \end{bmatrix}$$

Taking the first sub-initial homography transformation array $H_{11}$ as an example again, the fourth sub-initial homography transformation array $H_{14}$ (2, 2) obtained by splitting the first sub-initial homography transformation array $H_{11}$ along the row direction is specifically as below:

$$H_{14=}\begin{bmatrix} 485.9 & 374.9 \\ 0 & 221.8 \end{bmatrix}$$

The fifth sub-initial homography transformation array $H_{15}$ (2, 1) obtained by splitting the first sub-initial homography transformation array $H_{11}$ along the row direction is specifically as below:

$$H_{15=}\begin{bmatrix}8201.3\\8120.2\end{bmatrix}$$

For another example, before quantizing the second sub-initial homography transformation array $H_{12}$ to generate the second quantized sub-homography transformation array $H_{22}$, the method may include: splitting the second sub-initial homography transformation array $H_{12}$ along a row direction thereof to generate a plurality of sixth sub-initial homography transformation arrays $H_{16}$. The plurality of sixth sub-initial homography transformation arrays $H_{16}$ may include a seventh sub-initial homography transformation array $H_{17}$ and an eighth sub-initial homography transformation array $H_{18}$.

For example, a plurality of sixth sub-initial homography transformation arrays $H_{16}$ may be determined based on the initial element columns in the second sub-initial homography transformation array $H_{12}$. Each sixth sub-initial homography transformation array $H_{16}$ contains at least one column of initial element columns in the second sub-initial homography transformation array $H_{12}$, and two adjacent initial element columns contained in a same sixth sub-initial homography transformation array $H_{16}$ are adjacent in the second sub-initial homography transformation array $H_{12}$. Initial element columns contained in different sixth sub-initial homography transformation arrays $H_{16}$ are not repeated, and each of the initial element columns in the second sub-initial homography transformation array $H_{12}$ is in one sixth sub-initial homography transformation array $H_{16}$.

For example, initial element columns in the seventh sub-initial homography transformation array $H_{17}$ may be determined based on some of the initial element columns in the second sub-initial homography transformation array $H_{12}$, and the eighth sub-initial homography transformation array $H_{18}$ may be determined based on some other of the initial element columns in the second sub-initial homography transformation array $H_{12}$.

For example, the second sub-initial homography transformation array $H_{12}$ may be split into two sixth sub-initial homography transformation arrays $H_{16}$ along the row direction of the second sub-initial homography transformation array $H_{12}$, which respectively are the seventh sub-initial homography transformation array $H_{17}$ and the eighth sub-initial homography transformation array $H_{18}$.

In other words, the initial element columns in the seventh sub-initial homography transformation array $H_{17}$ may be determined based on a first column and a second column of the initial element columns in the second sub-initial homography transformation array $H_{12}$, and initial element columns in the eighth sub-initial homography transformation array $H_{18}$ may be determined based on a third column of the initial element columns in the second sub-initial homography transformation array $H_{12}$.

For example, the seventh sub-initial homography transformation array $H_{17}$ may be an array with one row and two columns, that is, $H_{17}$ (1, 2) may be specifically expressed as: $H_{17}=[m_{11}\ m_{12}]$

The eighth sub-initial homography transformation array $H_{18}$ may be an array with one row and one column, that is, $H_{18}$ (1, 1) may be specifically expressed as:
$H_{18}=m_{13}$

Taking the second sub-initial homography transformation array $H_{12}$ as an example again, the seventh sub-initial homography transformation array $H_{17}$ (1, 2) obtained by splitting the second sub-initial homography transformation array $H_{12}$ along the row direction is specifically as below: $H_{17}$-[0.4 0.2]

The eighth sub-initial homography transformation array $H_{18}$ (1, 1) obtained by splitting the second sub-initial homography transformation array $H_{12}$ along the row direction is specifically as below:
$H_{18}$-[69.8]

Correspondingly, quantizing the first sub-initial homography transformation array to generate the first quantized sub-homography transformation array may include: quantizing the fourth sub-initial homography transformation array to generate a fourth quantized sub-homography transformation array; and quantizing the fifth sub-initial homography transformation array to generate a fifth quantized sub-homography transformation array.

When quantizing the fourth sub-initial homography transformation array $H_{14}$, the sub-quantization coefficient $b$ (such as $b4$) of the fourth sub-initial homography transformation array $H_{14}$ may be determined first.

Specifically, in the fourth sub-initial homography transformation array $H_{14}$, if $m_{11}$ is the maximum initial element and $m_{12}$ is the minimum initial element, it is determined that the sub-actual numerical range of the fourth sub-initial homography transformation array $H_{14}$ is $m_{12}\sim m_{11}$. For example, in the fourth sub-initial homography transformation array $H_{14}$, if 485.9 is the maximum initial element of $H_{14}$ and 0 is the minimum initial element of $H_{14}$, in this example, the sub-actual numerical range of $H_{14}$ is 0~485.9.

When it is needed to quantize the initial elements in the fourth sub-initial homography transformation array $H_{14}$ in the data format of int8, the sub-quantization coefficient $b4$ may be (485.9-0)/255=1.9. When it is needed to quantize the initial elements in the fourth sub-initial homography transformation array $H_{14}$ in the data format of int16, a sub-quantization coefficient $b4'$ may be (485.9-0)/65535=0.007.

After the quantization coefficients $b$ (such as $b4$ and $b4'$) of the fourth sub-initial homography transformation array $H_{14}$ are determined, the fourth sub-initial homography transformation array $H_{14}$ may be quantized based on the quantization coefficients $b4$ and $b4'$.

For example, the fourth sub-initial homography transformation array $H_{14}$ is quantized in the data format of int8 to obtain the following fourth quantized sub-homography transformation array $H_{24}$ represented in decimal:

$$H_{24} = (H_{14} - H_{14min})/b4 = \begin{bmatrix} 255 & 197 \\ 0 & 116 \end{bmatrix}$$

$H_{14min}$ represents an array formed by $h_{14}min$. In other words, all data in $H_{14min}$ are $h_{14}min$ (a minimum value of the initial elements in the fourth sub-initial homography transformation array $H_{14}$).

The fourth sub-initial homography transformation array $H_{14}$ is quantized in the data format of int16 to obtain the following fourth quantized sub-homography transformation array $H_{24}$ (2, 2) represented in decimal:

$$H_{24} = (H_{14} - H_{14min})/b4' = \begin{bmatrix} 65535 & 53557 \\ 0 & 31685 \end{bmatrix}$$

Similarly, when quantizing the fifth sub-initial homography transformation array $H_{15}$, the sub-quantization coefficient $b$ (such as $b5$) of the fifth sub-initial homography transformation array $H_{15}$ may be determined first.

Specifically, in the fifth sub-initial homography transformation array $H_{15}$, if $m_{13}$ is the maximum initial element and $m_{23}$ is the minimum initial element, it is determined that the sub-actual numerical range of the fifth sub-initial homography transformation array $H_{15}$ is $m_{23}$-$m_{13}$. For example, in the fifth sub-initial homography transformation array $H_{15}$, if 8201.3 is the maximum initial element of $H_{15}$ and 8120.2 is the minimum initial element of $H_{15}$, in this example, the sub-actual numerical range of $H_{15}$ is 8120.2~8201.3.

In this case, when it is needed to quantize the initial elements in the fifth sub-initial homography transformation array $H_{15}$ in the data format of int8, the sub-quantization coefficient $b5$ may be (8201.3-8120.2)/255=0.31. When it is needed to quantize the initial elements in the fifth sub-initial homography transformation array $H_{15}$ in the data format of int16, a sub-quantization coefficient $b5'$ may be (8201.3-8120.2)/65535=0.001.

After the sub-quantization coefficients $b$ (such as $b5$ and $b5'$) of the fifth sub-initial homography transformation array $H_{15}$ are determined, the fifth sub-initial homography transformation array $H_{15}$ may be quantized based on the sub-quantization coefficients $b5$ and $b5'$.

For example, the fifth sub-initial homography transformation array $H_{15}$ is quantized in the data format of int8 to obtain the following fifth quantized sub-homography transformation array $H_{25}$ represented in decimal:

$$H_{25} = (H_{15} - H_{15min})/b5 = \begin{bmatrix} 255 \\ 0 \end{bmatrix}$$

$H_{15min}$ represents an array formed by $h_{15}min$. In other words, all data in $H_{15min}$ are $h_{15}min$ (a minimum value of the initial elements in the fifth sub-initial homography transformation array $H_{15}$).

The fifth sub-initial homography transformation array $H_{15}$ is quantized in the data format of int16 to obtain the following fifth quantized sub-homography transformation array $H_{25}$ represented in decimal:

$$H_{25} = (H_{15} - H_{15min})/b5' = \begin{bmatrix} 65535 \\ 0 \end{bmatrix}$$

In addition, in some examples, quantizing the second sub-initial homography transformation array to generate the second quantized sub-homography transformation array may include: quantizing the seventh sub-initial homography transformation array to generate a seventh quantized sub-homography transformation array; and quantizing the eighth sub-initial homography transformation array to generate an eighth quantized sub-homography transformation array.

When quantizing the seventh sub-initial homography transformation array $H_{17}$, the sub-quantization coefficient $b$ (such as $b7$) of the seventh sub-initial homography transformation array $H_{17}$ may be determined first.

Specifically, in the seventh sub-initial homography transformation array $H_{17}$, if $m_{12}$ is the maximum initial element and $m_{11}$ is the minimum initial element, it is determined that the sub-actual numerical range of the seventh sub-initial homography transformation array $H_{17}$ is $m_{12}$~$m_{11}$. For example, in the seventh sub-initial homography transformation array $H_{17}$, if 0.4 is the maximum initial element of $H_{17}$ and 0.2 is the minimum initial element of $H_{17}$, in this example, the sub-actual numerical range of $H_{17}$ is 0.2~0.4.

When it is needed to quantize initial elements in the seventh sub-initial homography transformation array $H_{17}$ in the data format of int8, the sub-quantization coefficient $b7$ may be (0.4-0.2)/255=0.00078. When it is needed to quantize initial elements in the seventh sub-initial homography transformation array $H_{17}$ in the data format of int16, a sub-

quantization coefficient $b7'$ may be (0.4-0.2)/65535=0.000003.

After the sub-quantization coefficients $b$ (such as $b7$ and $b7'$) of the seventh sub-initial homography transformation array $H_{17}$ are determined, the seventh sub-initial homography transformation array $H_{17}$ may be quantized based on the sub-quantization coefficients $b7$ and $b7'$.

For example, the seventh sub-initial homography transformation array $H_{17}$ is quantized in the data format of int8 to obtain the following seventh quantized sub-homography transformation array $H_{27}$ represented in decimal:

$$H_{27} = (H_{17} - H_{17min})/b7 = \begin{bmatrix} 255 & 0 \end{bmatrix}$$

$H_{17min}$ represents an array formed by $h_{17}$min. In other words, all data in $H_{17min}$ are $h_{17}$min (a minimum value of the initial elements in the seventh sub-initial homography transformation array $H_{17}$).

The seventh sub-initial homography transformation array $H_{17}$ is quantized in the data format of int16 to obtain the following seventh quantized sub-homography transformation array $H_{27}$ represented in decimal:

$$H_{27} = (H_{17} - H_{17min})/b7' = \begin{bmatrix} 65535 & 0 \end{bmatrix}$$

Similarly, when quantizing the eighth sub-initial homography transformation array $H_{18}$, the sub-quantization coefficient $b$ (such as $b8$) of the eighth sub-initial homography transformation array $H_{18}$ may be determined first.

Specifically, in the eighth sub-initial homography transformation array $H_{18}$, since there is only one data element $m_{13}$, this data element $m_{13}$ may be used as the maximum initial element and the minimum initial element of $H_{18}$. In this case, it is determined that the sub-actual numerical range of the eighth sub-initial homography transformation array $H_{18}$ is $m_{13} \sim m_{13}$. For example, in the eighth sub-initial homography transformation array $H_{18}$, if 69.8 is the only one initial element in $H_{18}$, 69.8 may be used as the maximum initial element and the minimum initial element of $H_{18}$. In this example, the sub-actual numerical range of $H_{18}$ is 69.8~69.8.

In this case, when it is needed to quantize initial elements in the eighth sub-initial homography transformation array $H_{18}$ in the data format of int8, the sub-quantization coefficient $b8$ may be (69.8-69.8)/255=0.0. When it is needed to quantize initial elements in the eighth sub-initial homography transformation array $H_{18}$ in the data format of int16, a sub-quantization coefficient $b8'$ may be (69.8-69.8)/65535=0.0.

After the sub-quantization coefficients $b$ (such as $b8$ and $b8'$) of the eighth sub-initial homography transformation array $H_{18}$ are determined, the eighth sub-initial homography transformation array $H_{18}$ may be quantized based on the sub-quantization coefficients $b8$ and $b8'$.

For example, the eighth sub-initial homography transformation array $H_{18}$ is quantized in the data format of int8 to obtain the following eighth quantized sub-homography transformation array $H_{28}$ represented in decimal:

$$H_{28} = (H_{18} - H_{18min})/b8 = \begin{bmatrix} 0 \end{bmatrix}$$

$H_{18min}$ represents an array formed by $h_{18}$min. In other words, all data in $H_{18min}$ are $h_{18}$min (a minimum value of the initial elements in the eighth sub-initial homography transformation array $H_{18}$, that is, 69.8).

The eighth sub-initial homography transformation array $H_{18}$ is quantized in the data format of int16 to obtain the following eighth quantized sub-homography transformation array $H_{28}$ represented in decimal:

$$H_{28} = (H_{18} - H_{18min})/b8' = \begin{bmatrix} 0 \end{bmatrix}$$

In this example, the fourth quantized sub-homography transformation array $H_{24}$, the fifth quantized sub-homography transformation array $H_{25}$, the seventh quantized sub-homography transformation array $H_{27}$, and the eighth quantized sub-homography transformation array $H_{28}$ together form the quantized homography transformation matrix $H_2$.

It may be understood that the initial homography transformation matrix $H_1$ is split, and the sub-initial homography transformation array $H_{1a}$ obtained through splitting is quantized separately, so that precision of the quantized homography transformation matrix $H_2$ that is finally generated is improved, and even the precision is not damaged during the process of quantizing the initial homography transformation matrix $H_1$.

For example, the fourth quantized sub-homography transformation array $H_{24}$, the fifth quantized sub-homography transformation array $H_{25}$, the seventh quantized sub-homography transformation array $H_{27}$, and the eighth quantized sub-homography transformation array $H_{28}$ that are obtained through quantization in the data format of int8 may be dequantized respectively, and four dequantized sub-arrays obtained through dequantization may be concatenated in columns. A concatenated matrix may be compared with the initial homography transformation matrix $H_1$ to analyze a precision loss.

For example, a quantized element $h_{24a}$ in the fourth quantized sub-homography transformation array $H_{24}$ may be calculated according to a dequantization formula $h_{24a}*b4+h_{14}$min to obtain a dequantized element $h_7$ in a dequantization array $H_7$, that is, $h_7=h_{24a}*b4+h_{14}$min. The finally obtained dequantization array $H_7$ is as follows:

$$\begin{bmatrix} 484.5 & 374.3 \\ 0 & 220.4 \end{bmatrix}$$

Similarly, a quantized element $h_{25a}$ in the fifth quantized sub-homography transformation array $H_{25}$ may be calculated according to a dequantization formula $h_{25a}*b5+h_{15}$min to obtain a dequantized element $h_8$ in a dequantization array $H_8$, that is, $h_8=h_{25a}*b5+h_{15}$min. The finally obtained dequantization array $H_8$ is as follows:

$$\begin{bmatrix} 8199.2 \\ 8120.2 \end{bmatrix}$$

A quantized element $h_{27a}$ in the seventh quantized sub-homography transformation array $H_{27}$ may be calculated according to a dequantization formula $h_{27a}*b7+h_{17}$min to obtain a dequantized element $h_9$ in a dequantization array $H_9$, that is, $h_9=h_{27a}* b7+h_{17}$min. The finally obtained dequantization array $H_9$ is as follows:

$$\begin{bmatrix} 0.4 & 0.5 \end{bmatrix}$$

A quantized element $h_{28a}$ in the eighth quantized sub-homography transformation array $H_{28}$ may be calculated according to a dequantization formula $h_{28a}* b8+h_{18}$minmin to obtain each dequantized element $h_{10}$ in a dequantization array $H_{10}$, that is, $h_{10}=h_{28a}* b8+h_{18}$min. The finally obtained dequantization array $H_{10}$ is as follows:

$$\begin{bmatrix} 69.8 \end{bmatrix}$$

Subsequently, the dequantization array $H_7$, the dequantization array $H_8$, the dequantization array $H_9$, and the dequantization array $H_{10}$ are concatenated by using an inverse process of the method for splitting the initial homography transformation matrix $H_1$, to obtain the following matrix $H_{11}$:

$$\begin{bmatrix} 484.5 & 374.3 & 8199.2 \\ 0 & 220.4 & 8120.2 \\ 0.4 & 0.2 & 69.8 \end{bmatrix}$$

By comparing the matrix $H_{11}$ with the initial homography transformation matrix $H_1$, it may be learned that there is no loss in precision.

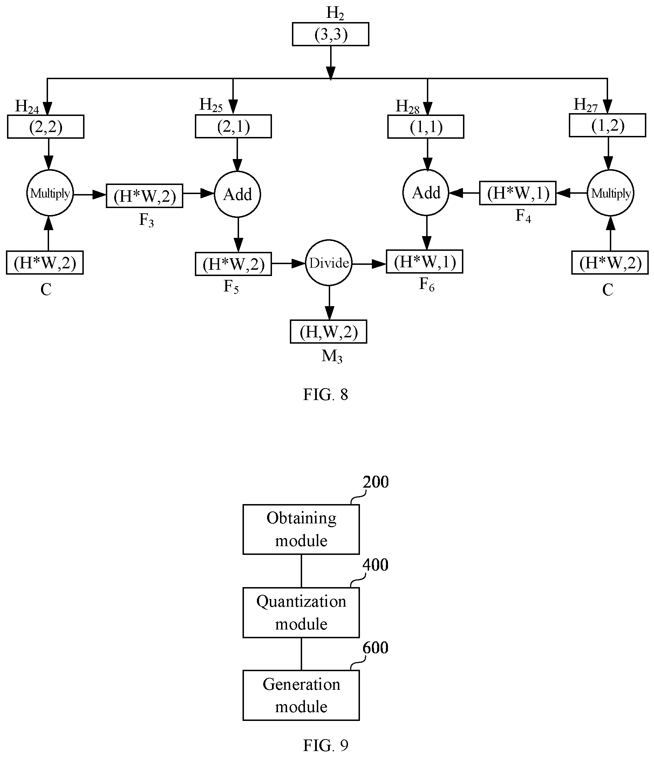

FIG. 8 is still another flowchart of generating a coordinate mapping matrix in a homography transformation-based image data processing method according to an exemplary embodiment of this disclosure. As shown in FIG. 8, in a feasible embodiment, the generating a first intermediate quantized homography transformation array based on a homography transformation constant and a first quantized sub-homography transformation array $H_{21}$ may specifically include the following steps.

S2051a: Generating a third intermediate quantized homography transformation matrix $F_3$ based on the homography transformation constant and a fourth quantized sub-homography transformation array $H_{24}$.

In some examples, if the third intermediate quantized homography transformation matrix $F_3$ may be generated by multiplying the homography transformation constant with the fourth quantized sub-homography transformation array $H_{24}$, in this example, the number of columns in the homography transformation constant is equal to the number of rows in the fourth quantized sub-homography transformation array $H_{24}$.

For example, if there are 2 rows in the fourth quantized sub-homography transformation array $H_{24}$, there are 2 columns in the homography transformation constant, that is, the homography transformation constant is (H * W, 2). In this case, the homography transformation constant may be a third homography transformation constant C. Taking that H is equal to 3 and W is equal to 3 as an example, the third homography transformation constant C may be expressed as:

$$B = \begin{bmatrix} (0,0) & (1,0) & (2,0) \\ (0,1) & (1,1) & (2,1) \\ (0,2) & (1,2) & (2,2) \end{bmatrix}$$

For example, when the number of columns in the fourth quantized sub-homography transformation array $H_{24}$ is 2, the third intermediate quantized homography transformation matrix $F_3$ (H * W, 2) is obtained after the third homography transformation constant C (H * W, 2) is multiplied with the fourth quantized sub-homography transformation array $H_{24}$ (2, 2).

Taking the fourth quantized sub-homography transformation array $H_{24}$ (2, 2) in the data format of int8 as an example again, the third intermediate quantized homography transformation matrix $F_3$ that is obtained after the third homography transformation constant C is multiplied with the fourth quantized sub-homography transformation array $H_{24}$ (2, 2) is specifically as follows:

$$F_3 = \begin{bmatrix} (0,0) & (72,0) & (144,0) \\ (56,33) & (128,33) & (199,33) \\ (111,66) & (183,66) & (255,66) \end{bmatrix}$$

S2051b: Generating the first intermediate quantized homography transformation array based on the third intermediate quantized homography transformation matrix $F_3$ and a fifth quantized sub-homography transformation array $H_{25}$.

In some examples, the first intermediate quantized homography transformation array may be obtained by adding the third intermediate quantized homography transformation matrix $F_3$ to the fifth quantized sub-homography transformation array $H_{25}$.

When an addition operation is performed on the third intermediate quantized homography transformation matrix $F_3$ and the fifth quantized sub-homography transformation array $H_{25}$, it is needed to ensure that the number of rows in the third intermediate quantized homography transformation matrix $F_3$ is equal to that in the fifth quantized sub-homography transformation array $H_{25}$. For example, both the quantities of rows in the third intermediate quantized homography transformation matrix $F_3$ and in the fifth quantized sub-homography transformation array $H_{25}$ are 3.

When the count of rows in the fifth quantized sub-homography transformation array $H_{25}$ is less than 3, the count of rows in the fifth quantized sub-homography transformation array $H_{25}$ may be copied to 3 before the addition operation is performed on the third intermediate quantized homography transformation matrix $F_3$ and the fifth quantized sub-homography transformation array $H_{25}$. For example, in the foregoing example, if the count of rows in the fifth quantized sub-homography transformation array $H_{25}$ is 2, quantized elements in a last row in the fifth quantized sub-homography transformation array $H_{25}$ may be copied once until there are 3 rows in the fifth quantized sub-homography transformation array $H_{25}$.

Similarly, the number of columns in the third intermediate quantized homography transformation matrix $F_3$ is equal to that in the fifth quantized sub-homography transformation array $H_{25}$. For example, if the count of columns in the third intermediate quantized homography transformation matrix $F_3$ is 2, the count of columns in the fifth quantized sub-homography transformation array $H_{25}$ is 2. In the foregoing example, if the count of columns in the fifth quantized sub-homography transformation array $H_{25}$ is 1, the one column of quantized elements in the fifth quantized sub-homography transformation array $H_{25}$ may be copied once, so that there are 2 columns in the fifth quantized sub-homography transformation array $H_{25}$.

Taking the fifth quantized sub-homography transformation array $H_{25}$ (2, 1) in the data format of int8 as an example again, a first intermediate quantized homography transformation array $F_5$ that is obtained after the third intermediate quantized homography transformation matrix $F_3$ is added to the fifth quantized sub-homography transformation array $H_{25}$ (2, 1) is specifically as follows:

$$F_5 = \begin{bmatrix} (11,0) & (80,0) & (149,0) \\ (65,31) & (133,31) & (202,31) \\ (118,63) & (186,63) & (255,63) \end{bmatrix}$$

Correspondingly, in some examples, the generating a second intermediate quantized homography transformation array based on the homography transformation constant and a second quantized sub-homography transformation array may specifically include the following steps.

S2053a: Generating a fourth intermediate quantized homography transformation matrix $F_4$ based on the

homography transformation constant and a seventh quantized sub-homography transformation array $H_{27}$.

In some examples, if the fourth intermediate quantized homography transformation matrix $F_4$ may be generated by multiplying the homography transformation constant such as the third homography transformation constant C with the seventh quantized sub-homography transformation array $H_{27}$, in this example, the number of columns in the homography transformation constant is equal to the number of rows in the seventh quantized sub-homography transformation array $H_{27}$.

For example, if the count of columns in the homography transformation constant is 2, the count of rows in the seventh quantized sub-homography transformation array $H_{27}$ is 2. In this example, if the count of rows in the seventh quantized sub-homography transformation array $H_{27}$ is 1, the one row of quantized elements in the seventh quantized sub-homography transformation array $H_{27}$ may be copied once before the homography transformation constant such as the third homography transformation constant C is multiplied with the seventh quantized sub-homography transformation array $H_{27}$, so that there are 2 rows in the seventh quantized sub-homography transformation array $H_{27}$.

Taking the seventh quantized sub-homography transformation array $H_{27}$ (1, 2) in the data format of int8 as an example again, the fourth intermediate quantized homography transformation matrix $F_4$ that is obtained after the third homography transformation constant C (3 * 3, 2) is multiplied with the seventh quantized sub-homography transformation array $H_{27}$ (1, 2) is specifically as follows:

$$F4 = \begin{bmatrix} (0) & (85) & (170) \\ (42) & (128) & (212) \\ (85) & (170) & (255) \end{bmatrix}$$

S2053b: Generating a second intermediate quantized homography transformation array $F_6$ based on the fourth intermediate quantized homography transformation matrix $F_4$ and an eighth quantized sub-homography transformation array $H_{28}$.

In some examples, the second intermediate quantized homography transformation array $F_6$ may be obtained by adding the fourth intermediate quantized homography transformation matrix $F_4$ to the eighth quantized sub-homography transformation array $H_{28}$.

When an addition operation is performed on the fourth intermediate quantized homography transformation matrix $F_4$ and the eighth quantized sub-homography transformation array $H_{28}$, it is needed to ensure that the number of rows in the fourth intermediate quantized homography transformation matrix $F_4$ is equal to that in the eighth quantized sub-homography transformation array $H_{28}$.

For example, the count of rows in the fourth intermediate quantized homography transformation matrix $F_4$ is 3. When the count of rows in the eighth quantized sub-homography transformation array $H_{28}$ is less than 3, the count of rows in the eighth quantized sub-homography transformation array $H_{28}$ may be copied to 3 before the addition operation is performed on the fourth intermediate quantized homography transformation matrix $F_4$ and the eighth quantized sub-homography transformation array $H_{28}$.

For example, in the foregoing example, if the count of rows in the eighth quantized sub-homography transformation array $H_{28}$ is 1, the one row of quantized elements in the eighth quantized sub-homography transformation array $H_{28}$ may be copied twice until there are 3 rows in the eighth quantized sub-homography transformation array $H_{28}$. It may be understood that in the eighth quantized sub-homography transformation array $H_{28}$, the quantized elements in each row are consistent.

Similarly, the number of columns in the fourth intermediate quantized homography transformation matrix $F_4$ is equal to that in the eighth quantized sub-homography transformation array $H_{28}$. For example, if the count of columns in the fourth intermediate quantized homography transformation matrix $F_4$ is 1, the count of columns in the eighth quantized sub-homography transformation array $H_{28}$ is 1.

Taking the eighth quantized sub-homography transformation array $H_{28}$ (1, 1) in the data format of int8 as an example again, the second intermediate quantized homography transformation array $F_6$ that may be obtained after the fourth intermediate quantized homography transformation matrix $F_4$ is added to the eighth quantized sub-homography transformation array $H_{28}$ (1, 1) is specifically as follows:

$$F_6 = \begin{bmatrix} (0) & (85) & (170) \\ (42) & (128) & (213) \\ (85) & (170) & (255) \end{bmatrix}$$

Subsequently, a coordinate mapping matrix $M_3$ is generated based on the first intermediate quantized homography transformation array $F_5$ and the second intermediate quantized homography transformation array $F_6$.

In some feasible implementations, the coordinate mapping matrix $M_3$ may be obtained by dividing the first intermediate quantized homography transformation array $F_5$ by the second intermediate quantized homography transformation array $F_6$.

For example, the coordinate mapping matrix $M_3$ finally obtained by dividing $F_5$ by $F_6$ is as follows:

$$M_3 = \begin{bmatrix} (117,116) & (124,116) & (130,115) \\ (123,119) & (129,118) & (135,118) \\ (128,122) & (134,121) & (140,121) \end{bmatrix}$$

By respectively comparing $M_3$ and $M_1$ with $M_0$, it may be learned that $M_3$ is closer to $M_0$. It may be learned that, the fourth quantized sub-homography transformation array $H_{24}$, the fifth quantized sub-homography transformation array $H_{25}$, the seventh quantized sub-homography transformation array $H_{27}$, and the eighth quantized sub-homography transformation array $H_{28}$ with higher precision are generated by splitting the initial homography transformation matrix $H_1$ into the fourth sub-initial homography transformation array $H_{14}$, the fifth sub-initial homography transformation array $H_{15}$, the seventh sub-initial homography transformation array $H_{17}$, and the eighth sub-initial homography transformation array $H_{18}$; and quantizing the fourth sub-initial homography transformation array $H_{14}$, the fifth sub-initial homography transformation array $H_{15}$, the seventh sub-initial homography transformation array $H_{17}$, and the eighth sub-initial homography transformation array $H_{18}$, respectively. Correspondingly, accuracy of the coordinate mapping matrix generated based on the fourth quantized sub-homography transformation array $H_{24}$, the fifth quantized sub-homography transformation array $H_{25}$, the seventh quantized sub-homography transformation array $H_{27}$, and the eighth quantized sub-homography transformation array $H_{28}$ is also improved, thereby improving the accuracy of the target image data in the second angle of view.

**Exemplary apparatus**

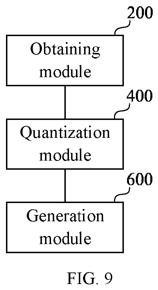

FIG. 9 is a diagram of a structure of a homography transformation-based image data processing apparatus according to an exemplary embodiment of this disclosure. As shown in FIG. 9, an embodiment of this disclosure further provides a homography transformation-based image data processing apparatus, including:

an obtaining module 200, configured to obtain an initial homography transformation matrix corresponding to initial image data in a first angle of view, wherein initial elements in the initial homography transformation matrix occupies a first byte count;

The initial homography transformation matrix is represented by using $H_1$, as shown below:

$$H_1 = \begin{bmatrix} h_{11} & h_{12} & h_{13} \\ h_{21} & h_{22} & h_{23} \\ h_{31} & h_{32} & h_{33} \end{bmatrix}$$

$h_{11}$, $h_{12}$, $h_{13}$, ..., and $h_{33}$ respectively represent an initial elements in $H_1$. An initial element in the initial homography transformation matrix $H_1$ is represented in a data format of float32. Correspondingly, the first byte count is 4 and a count of bits is 32.

a quantization module 400, configured to quantize the initial elements in the initial homography transformation matrix to generate a quantized homography transformation matrix, wherein quantized elements in the quantized homography transformation matrix occupies a second byte count of bytes, and the second byte count is less than the first byte count.

Specifically, after the initial homography transformation matrix $H_1$ is obtained, the initial element in the initial homography transformation matrix $H_1$ may be quantized into the quantized element that occupies the second byte count, so that the initial homography transformation matrix $H_1$ is finally quantized into a quantized homography transformation matrix $H_2$.

In some examples, the data format of the quantized element may be int8. That is, an initial element is quantized in the data format of int8, so as to generate the quantized homography transformation matrix $H_2$. The second byte count occupied by the quantized element in the quantized homography transformation matrix $H_2$ is 1. In other words, the quantized element occupies 8 bits.

In some other examples, the data format of the quantized element may be int16. That is, initial element is quantized in the data format of int16, so as to generate the quantized homography transformation matrix $H_2$. The second byte count occupied by the quantized element in the quantized homography transformation matrix $H_2$ is 2. In other words, the quantized element occupies 16 bits.

a generation module 600, configured to generate a coordinate mapping matrix based on the quantized homography transformation matrix.

For example, an intermediate homography transformation matrix E may be generated based on the quantized homography transformation matrix $H_2$ and a first homography transformation constant A. Subsequently, a coordinate mapping matrix M may be generated based on the intermediate homography transformation matrix E.

In addition, the generation module 600 is also configured to obtain target image data in a second angle of view based on the initial image data and the coordinate mapping matrix.

For example, after a coordinate mapping matrix $M_1$ is determined, the generation module 600 may input an index value in the data based on the coordinate mapping matrix $M_1$ to finally obtain output data. In this case, the input data is converted into the output data in another angle of view through the homography transformation-based image data processing method in the embodiments of this disclosure. It may be understood that the input data may include poses of a plurality of sampling points in the initial image data in the first angle of view (such as coordinate values in a pixel coordinate system) and image data in those poses. For example, as shown in FIG. 1, the initial image data has four sampling points P, Q, R, and S. The input data includes coordinate values of the sampling points P, Q, R, and S in the pixel coordinate system and image data corresponding to each point.

In addition, the output data includes poses of the sampling points in the corresponding initial image data in the target image data in the second angle of view and the target image data. For example, the output data includes coordinate values of the sampling points P, Q, R, and S in the second angle of view and the image data of the sampling points, so that the target image data in the second angle of view is determined. In other words, the initial image data in the first angle of view is transformed into the target image data in the second angle of view through the coordinate mapping matrix that is generated based on the homography transformation matrix.

In view of the above, it may be learned that according to the homography transformation-based image data processing apparatus in this embodiment of this disclosure, in the initial homography transformation matrix, an initial element occupying the first byte count is quantized into the quantized element occupying the second byte count of bytes by using the quantization module 400, that is, the initial homography transformation matrix in which the initial element occupying the first byte count is quantized into the quantized homography transformation matrix in which the quantized element occupying bytes less than the first byte count, so as to reduce space occupied by each quantized element in the quantized homography transformation matrix. Subsequently, the coordinate mapping matrix is generated based on the quantized homography transformation matrix by using the generation module 600, and then the target image data in the second angle of view is generated based on the coordinate mapping matrix and the initial image data in the first angle of view.

Compared to related technologies of generating a coordinate mapping matrix based on a homography transformation matrix formed by initial elements occupying a first byte count (such as 4, corresponding to the data format of float32), in this embodiment of this disclosure, the initial homography transformation matrix occupying the first byte count is quantized to generate the quantized homography transformation matrix. The quantized element in the quantized homography matrix occupies the second byte count, which is smaller than the first byte count. Subsequently, the quantized homography matrix with a smaller count of quantized bytes is used to generate the coordinate mapping matrix, and then the target image data in the second angle of view is determined based on the initial image data and the coordinate mapping matrix. On one hand, space occupied by the quantized homography transformation matrix is saved; and on the other hand, a generation speed of the coordinate mapping matrix is improved, thereby improving overall efficiency of a homography transformation-based image data processing process.

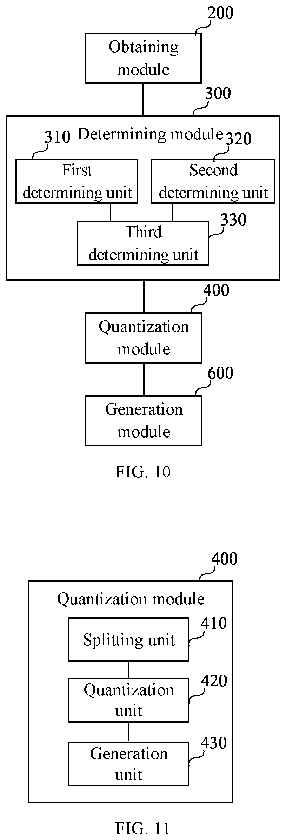

FIG. 10 is a diagram of another structure of a homography transformation-based image data processing apparatus according to an exemplary embodiment of this disclosure. As shown in FIG. 10, the homography transformation-based image data processing apparatus provided in this embodiment of this disclosure may further include:
a determining module 300, configured to determine a quantization coefficient based on the second byte count.

Specifically, the determining module 300 may include a first determining unit 310, a second determining unit 320, and a third determining unit 330. The first determining unit 310 is configured to determine a quantization representation range based on the second byte count.

The second determining unit 320 is configured to determine an actual numerical range based on a maximum initial element and a minimum initial element in the initial homography transformation matrix.

The third determining unit 330 is configured to determine the quantization coefficient based on the quantization representation range and the actual numerical range.

After the quantization coefficient is determined, the quantization module 400 may quantize the initial elements in the initial homography transformation matrix based on the quantization coefficient, to generate the quantized homography transformation matrix.

FIG. 11 is a diagram of a structure of a quantization module in a homography transformation-based image data processing apparatus according to an exemplary embodiment of this disclosure. As shown in FIG. 11, in some examples, the quantization module 400 may include:
a splitting unit 410, configured to split the initial homography transformation matrix to generate a plurality of sub-initial homography transformation arrays;

For example, the splitting unit 410 may split the initial homography transformation matrix along a column direction of the initial homography transformation matrix to generate at least two sub-initial homography transformation arrays, wherein the at least two the sub-initial homography transformation arrays include a first sub-initial homography transformation array and a second sub-initial homography transformation array.

a quantization unit 420, configured to quantize each initial element in the sub-initial homography transformation arrays, to generate corresponding quantized sub-homography transformation arrays.

For example, the quantization unit 420 may include a first quantization subunit and a second quantization subunit.

The first quantization subunit is configured to quantize the first sub-initial homography transformation array to generate a first quantized sub-homography transformation array. The second quantization subunit is configured to quantize the second sub-initial homography transformation array to generate a second quantized sub-homography transformation array.

a generation unit 430, configured to generate the quantized homography transformation matrix based on a plurality of quantized sub-homography transformation matrices.

For example, the generation unit 430 may include a first generation subunit, a second generation subunit, and a third generation subunit.

The first generation subunit is configured to generate a first intermediate quantized homography transformation array based on a homography transformation constant and the first quantized sub-homography transformation array. The second generation subunit is configured to generate a second intermediate quantized homography transformation array based on the homography transformation constant and the second quantized sub-homography transformation array. The third generation subunit is configured to generate the coordinate mapping matrix based on the first intermediate quantized homography transformation array and the second intermediate quantized homography transformation array.

In some other examples, the splitting unit 410 may further include a first splitting subunit and a second splitting subunit.

The first splitting subunit may be configured to split the first sub-initial homography transformation array along a row direction of the first sub-initial homography transformation array to generate a plurality of third sub-initial homography transformation arrays, wherein the plurality of third sub-initial homography transformation arrays include a fourth sub-initial homography transformation array and a fifth sub-initial homography transformation array.

The second splitting subunit may be configured to split the second sub-initial homography transformation array along a row direction of the second sub-initial homography transformation array to generate a plurality of sixth sub-initial homography transformation arrays, wherein the plurality of sixth sub-initial homography transformation arrays include a seventh sub-initial homography transformation array and an eighth sub-initial homography transformation array.

In this example, the first quantization subunit may be configured to quantize the fourth sub-initial homography transformation array to generate a fourth quantized homography transformation array. The first quantization subunit may further be configured to quantize the fifth sub-initial homography transformation array to generate a fifth quantized homography transformation array.

The first generation subunit may first generate a third intermediate quantized homography transformation array based on the homography transformation constant and a fourth quantized sub-homography transformation array; and then generate the first intermediate quantized homography transformation array based on the third intermediate quantized homography transformation array and a fifth quantized sub-homography transformation array.

In addition, the second quantization subunit may be configured to quantize the seventh sub-initial homography transformation array to generate a seventh quantized sub-homography transformation array; and may also be configured to quantize the eighth sub-initial homography transformation array to generate an eighth quantized sub-homography transformation array.

The second generation subunit may first generate a fourth intermediate quantized homography transformation array based on the homography transformation constant and a seventh quantized sub-homography transformation array; and then generate the second intermediate quantized homography transformation array based on the fourth intermediate quantized homography transformation array and an eighth quantized sub-homography transformation array.

## Exemplary electronic device

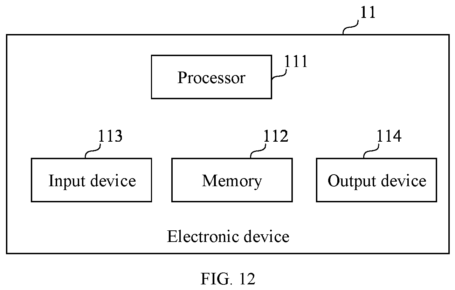

An electronic device according to an embodiment of this disclosure is described below with reference to FIG. 12. The electronic device may be any one or two of a first device and a second device, or a stand-alone device separated from the first device and the second device. The stand-alone device may communicate with the first device and the second device, to receive an obtained input signal therefrom. It may be understood that in this embodiment of this disclosure, the input signal is input data.

FIG. 12 shows a block diagram of an electronic device according to an embodiment of this disclosure.

As shown in FIG. 12, an electronic device 11 includes one or more processors 111 and a memory 112.

The processor 111 may be a central processing unit (CPU) or another form of processing unit having a data processing capability and/or an instruction execution capability, and may control other components in the electronic device 11 to implement desired functions.

The memory 112 may include one or more computer program products, which may include various forms of computer-readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer-readable storage medium. The processor 111 may execute the program instruction to implement the homography transformation-based image data processing method according to various embodiments of this disclosure that are described above and/or other desired functions. Various contents such as an input signal, a signal component, and a noise component may also be stored in the computer-readable storage medium.

In an example, the electronic device 11 may further include an input device 113 and an output device 114. These components are connected to each other through a bus system and/or another form of connection mechanism (not shown).

For example, when the electronic device 11 is the first device or the second device, the input device 113 may include but is not limited to any one of a keyboard, a mouse, a microphone, or a microphone array, which is configured to obtain the input data (that is, the input signal) on which homography transformation is to be performed. When the electronic device 11 is a stand-alone device, the input device 113 may be a communication network connector for receiving the collected input signal from the first device and the second device.

The output device 114 may output various information to the outside, including determined output data and the like. The output device 114 may include, for example, a display, a speaker, a printer, a communication network, and a remote output device connected by the communication network.

Certainly, for simplicity, FIG. 11 shows only some of components in the electronic device 11 that are related to this disclosure, and components such as a bus and an input/output interface are omitted. In addition, according to specific application situations, the electronic device 11 may further include any other appropriate components.

**Exemplary computer program product and computer-readable storage medium**

In addition to the foregoing method and device, embodiments of this disclosure may also relate to a computer program product, which includes computer program instructions. When the computer program instructions are run by a processor, the processor is enabled to perform the steps, of the homography transformation-based image data processing method according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer-readable storage medium, which stores computer program instructions. When the computer program instructions are run by the processor, the processor is enabled to perform the steps, of the homography transformation-based image data processing method according to the embodiments of this disclosure, that are described in the "Exemplary method" section of this specification.

The computer-readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

The foregoing descriptions are given for illustration and description. In addition, the description is not intended to limit the embodiments of this disclosure to forms disclosed herein. Although a plurality of exemplary aspects and embodiments have been discussed above, a person skilled in the art may recognize certain variations, modifications, changes, additions, and subcombinations thereof.

**Claims**

1.  A homography transformation-based image data processing method, comprising:

    obtaining an initial homography transformation matrix corresponding to initial image data in a first angle of view, wherein each of initial elements in the initial homography transformation matrix occupies a first byte count of bytes;
    quantizing the initial elements in the initial homography transformation matrix to generate a quantized homography transformation matrix, wherein each of quantized elements in the quantized homography transformation matrix occupies a second byte count of bytes, and the second byte count is less than the first byte count;
    generating a coordinate mapping matrix based on the quantized homography transformation matrix; and
    obtaining target image data in a second angle of view based on the initial image data and the coordinate mapping matrix.

2.  The method according to claim 1, wherein before the quantizing the initial elements in the initial homography transformation matrix to generate a quantized homography transformation matrix, the method further comprises:

    determining a quantization coefficient based on the second byte count; and
    the quantizing the initial elements in the initial homography transformation matrix to generate a quantized homography transformation matrix comprises:
    quantizing, based on the quantization coefficient, initial elements in the initial homography transformation matrix to generate the quantized homography transformation matrix.

3.  The method according to claim 2, wherein the determining a quantization coefficient based on the second byte count comprises:

    determining a quantization representation range based on the second byte count;
    determining an actual numerical range based on a maximum initial element and a minimum initial element in the initial homography transformation matrix; and
    determining the quantization coefficient based on the quantization representation range and the actual numerical range.

4.  The method according to any one of claims 1 to 3, wherein the quantizing the initial elements in the initial homography transformation matrix to generate a quantized homography transformation matrix comprises:

    generating a plurality of sub-initial homography transformation arrays based on the initial homography transformation matrix;
    quantizing the initial elements in the sub-initial homography transformation arrays, to generate corresponding quantized sub-homography transformation arrays; and
    generating the quantized homography transformation matrix based on a plurality of the quantized sub-homography transformation arrays.

5.  The method according to claim 4, wherein before the quantizing the initial elements in the sub-initial homography transformation arrays, to generate corresponding quantized sub-homography transformation arrays, the method further comprises:

    determining a quantization representation range based on the second byte count;
    determining a sub-actual numerical range for the sub-initial homography transformation arrays based on a maximum initial element and a minimum initial element in the sub-initial homography transformation arrays; and
    determining a sub-quantization coefficient for the sub-initial homography transformation arrays based on the quantization representation range and the sub-actual numerical range; and

the quantizing the initial elements in the sub-initial homography transformation arrays, to generate corresponding quantized sub-homography transformation arrays comprises:
quantizing the initial elements in the sub-initial homography transformation arrays based on the sub-quantization coefficient, to generate the corresponding quantized sub-homography transformation arrays.

6. The method according to claim 4, wherein the generating a plurality of sub-initial homography transformation arrays based on the initial homography transformation matrix comprises:

splitting the initial homography transformation matrix along a column direction of the initial homography transformation matrix to generate at least two sub-initial homography transformation arrays, wherein the at least two the sub-initial homography transformation arrays comprise a first sub-initial homography transformation array and a second sub-initial homography transformation array; and
the quantizing the initial elements in the sub-initial homography transformation arrays, to generate corresponding quantized sub-homography transformation arrays comprises:

quantizing the first sub-initial homography transformation array to generate a first quantized sub-homography transformation array; and
quantizing the second sub-initial homography transformation array to generate a second quantized sub-homography transformation array.

7. The method according to claim 6, wherein the generating a coordinate mapping matrix based on the quantized homography transformation matrix comprises:

generating a first intermediate quantized homography transformation array based on a homography transformation constant and the first quantized sub-homography transformation array;
generating a second intermediate quantized homography transformation array based on the homography transformation constant and the second quantized sub-homography transformation array; and
generating the coordinate mapping matrix based on the first intermediate quantized homography transformation array and the second intermediate quantized homography transformation array.

8. The method according to claim 7, wherein before the quantizing the first sub-initial homography transformation array to generate a first quantized sub-homography transformation array, the method further comprises:

splitting the first sub-initial homography transformation array along a row direction of the first sub-initial homography transformation array to generate a plurality of third sub-initial homography transformation arrays, wherein the plurality of third sub-initial homography transformation arrays comprise a fourth sub-initial homography transformation array and a fifth sub-initial homography transformation array; and
the quantizing the first sub-initial homography transformation array to generate a first quantized sub-homography transformation array comprises:

quantizing the fourth sub-initial homography transformation array to generate a fourth sub-quantized homography transformation array; and
quantizing the fifth sub-initial homography transformation array to generate a fifth sub-quantized homography transformation array.

9. The method according to claim 8, wherein the generating a first intermediate quantized homography transformation array based on a homography transformation constant and the first quantized sub-homography transformation array comprises:

generating a third intermediate quantized homography transformation array based on the homography transformation constant and the fourth quantized sub-homography transformation array; and
generating the first intermediate quantized homography transformation array based on the third intermediate quantized homography transformation array and the fifth quantized sub-homography transformation array.

10. The method according to claim 7, wherein before the quantizing the second sub-initial homography transformation array to generate a second quantized sub-homography transformation array, the method further comprises:

splitting the second sub-initial homography transformation array along a row direction of the second sub-initial homography transformation array to generate a plurality of sixth sub-initial homography transformation arrays, wherein the plurality of sixth sub-initial homography transformation arrays comprise a seventh sub-initial homography transformation array and an eighth sub-initial homography transformation array; and
the quantizing the second sub-initial homography transformation array to generate a second quantized sub-homography transformation array comprises:

quantizing the seventh sub-initial homography transformation array to generate a seventh sub-quantized homography transformation array; and
quantizing the eighth sub-initial homography transformation array to generate an eighth sub-quantized homography transformation array.

11. The method according to claim 10, wherein the generating a second intermediate quantized homography transformation array based on the homography transformation constant and the second quantized sub-homography transformation array comprises:

generating a fourth intermediate quantized homography transformation array based on the homography transformation constant and the seventh quantized sub-homography transformation array; and
generating the second intermediate quantized homography transformation array based on the fourth intermediate quantized homography transformation array and the eighth quantized sub-homography transformation array.

12. A homography transformation-based image data processing apparatus, comprising:

an obtaining module, configured to obtain an initial homography transformation matrix corresponding to initial image data in a first angle of view, wherein initial elements in the initial homography transformation matrix respectively occupy a first byte count of bytes;
a quantization module, configured to quantize the initial elements in the initial homography transformation matrix to generate a quantized homography transformation matrix, wherein quantized elements in the quantized homography transformation matrix respectively occupy a second byte count of bytes, and the second byte count is less than the first byte count; and
a generation module, configured to generate a coordinate mapping matrix based on the quantized homography transformation matrix, and obtain target image data in a second angle of view based on the initial image data and the coordinate mapping matrix.

13. A computer-readable storage medium, wherein the storage medium stores a computer program, and the computer program is used for implementing the homography transformation-based image data processing method according to any one of claims 1 to 11.

14. An electronic device, wherein the electronic device comprises:

a processor; and
a memory, configured to store processor-executable instructions, wherein
the processor is configured to read the executable instructions from the memory, and execute the instructions to implement the homography transformation-based image data processing method according to any one of claims 1 to 11.

(a) (b)

FIG. 1

S101

Obtaining an initial homography transformation matrix corresponding to initial image data in a first angle of view

S103

Quantizing the initial elements in the initial homography transformation matrix to generate a quantized homography transformation matrix

S105

Generating a coordinate mapping matrix based on the quantized homography transformation matrix

S107

Determining target image data in a second angle of view based on the initial image data and the coordinate mapping matrix

FIG. 2

FIG. 3

S101

Obtaining an initial homography transformation matrix corresponding to initial image data in a first angle of view

S102

Determining a quantization coefficient based on a second byte count

S103

Quantizing the initial elements in the initial homography transformation matrix to generate a quantized homography transformation matrix

S105

Generating a coordinate mapping matrix based on the quantized homography transformation matrix

S107

Determining target image data in a second angle of view based on the initial image data and the coordinate mapping matrix

FIG. 4

S1032

Splitting an initial homography transformation matrix to generate at least two sub-initial homography transformation arrays

S1034

Quantizing the initial elements in the sub-initial homography transformation arrays, to generate corresponding quantized sub-homography transformation arrays

S1036

Generating a quantized homography transformation matrix based on a plurality of quantized sub-homography transformation matrices

FIG. 5

S2051

Generating a first intermediate quantized homography transformation array based on a homography transformation constant and a first quantized sub-homography transformation array $H_{21}$

S2053

Generating a second intermediate quantized homography transformation array based on the homography transformation constant and a second quantized sub-homography transformation array $H_{22}$

S2055

Generating a coordinate mapping matrix $M_2$ based on the first intermediate quantized homography transformation array and the second intermediate quantized homography transformation array

FIG. 6

$H_2$

(3,3)

$H_{21}$ (2,3)     (1,3) $H_{22}$

(H*W,3)
B     Multiply     Multiply     (H*W,3)
B

(H*W,2)     Divide     (H*W,1)
$F_1$     $F_2$

(H,W,2)

$M_2$

FIG. 7

FIG. 8

FIG. 9

200

┌─────────────────┐
│   Obtaining     │
│    module       │
└─────────────────┘

400

┌─────────────────┐
│  Quantization   │
│    module       │
└─────────────────┘

600

┌─────────────────┐
│   Generation    │
│    module       │
└─────────────────┘

FIG. 9

200

Obtaining
module

300

310 Determining module 320

First
determining unit

Second
determining unit

330

Third
determining unit

400

Quantization
module

600

Generation
module

FIG. 10

400

Quantization module

410

Splitting unit

420

Quantization
unit

430

Generation
unit

FIG. 11

11

Processor 111

113 112 114

Input device | Memory | Output device

Electronic device

FIG. 12

## INTERNATIONAL SEARCH REPORT

| | |
|---|---|
| International application No. |
| **PCT/CN2023/114871** |

**A.    CLASSIFICATION OF SUBJECT MATTER**

G06T3/00(2006.01)i

According to International Patent Classification (IPC) or to both national classification and IPC

**B.    FIELDS SEARCHED**

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

CNABS, CNTXT, VEN, ENTXT, ENTXTC, 必应, BING, 百度学术, BAIDU SCHOLAR, CNKI, IEEE, ACM: 视角, 转换, 变换, 单应, 矩阵, 量化, 位, 比特, 浮点型, 整型, view, conver+, transform+, homography, matrix, matrices, quanti+, bit, byte, float, int

**C.    DOCUMENTS CONSIDERED TO BE RELEVANT**

| Category* | Citation of document, with indication, where appropriate, of the relevant passages | Relevant to claim No. |
|---|---|---|
| PX | CN 115936974 A (BEIJING HORIZON ROBOTICS TECHNOLOGY RESEARCH AND DEVELOPMENT CO., LTD.) 07 April 2023 (2023-04-07) <br> description, paragraphs 48-397, and figures 1-12 | 1-14 |
| A | CN 113228105 A (SENSETIME INTERNATIONAL PTE. LTD.) 06 August 2021 (2021-08-06) <br> description, paragraphs 0067-0159, and figures 1-8 | 1-14 |
| A | CN 115170679 A (ZHIDAO NETWORK TECHNOLOGY (BEIJING) CO., LTD.) 11 October 2022 (2022-10-11) <br> entire document | 1-14 |
| A | CN 108596981 A (ARKMICRO TECHNOLOGIES (SHENZHEN) CO., LTD.) 28 September 2018 (2018-09-28) <br> entire document | 1-14 |
| A | US 2013287318 A1 (ADOBE SYSTEMS INC.) 31 October 2013 (2013-10-31) <br> entire document | 1-14 |

☑ Further documents are listed in the continuation of Box C.          ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 October 2023** | **14 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/114871** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2020293816 A1 (UBICQUIA IQ LLC) 17 September 2020 (2020-09-17)<br>entire document | 1-14 |

Form PCT/ISA/210 (second sheet) (July 2022)

## INTERNATIONAL SEARCH REPORT
### Information on patent family members

International application No.

**PCT/CN2023/114871**

| Patent document cited in search report | | | Publication date (day/month/year) | Patent family member(s) | | | Publication date (day/month/year) |
|---|---|---|---|---|---|---|---|
| CN | 115936974 | A | 07 April 2023 | None | | | |
| CN | 113228105 | A | 06 August 2021 | US | 2021201068 | A1 | 01 July 2021 |
| | | | | US | 11354883 | B2 | 07 June 2022 |
| | | | | PH | 12020550750 | A1 | 19 April 2021 |
| | | | | WO | 2021136981 | A1 | 08 July 2021 |
| | | | | KR | 20210088436 | A | 14 July 2021 |
| | | | | AU | 2020294190 | A1 | 15 July 2021 |
| | | | | SG | 10201913798 | A1 | 29 July 2021 |
| | | | | SG | 10201913798 | B | 30 July 2021 |
| | | | | JP | 2022519398 | W | 24 March 2022 |
| | | | | AU | 2020294190 | B2 | 26 May 2022 |
| | | | | KR | 102421604 | B1 | 15 July 2022 |
| | | | | JP | 7121132 | B2 | 17 August 2022 |
| CN | 115170679 | A | 11 October 2022 | None | | | |
| CN | 108596981 | A | 28 September 2018 | CN | 108596981 | B | 11 March 2022 |
| US | 2013287318 | A1 | 31 October 2013 | US | 2015215531 | A1 | 30 July 2015 |
| | | | | US | 9582855 | B2 | 28 February 2017 |
| | | | | DE | 112013002200 | T5 | 08 January 2015 |
| | | | | US | 9008460 | B2 | 14 April 2015 |
| | | | | GB | 201420884 | D0 | 07 January 2015 |
| | | | | GB | 2516405 | A | 21 January 2015 |
| | | | | GB | 2516405 | B | 15 June 2016 |
| | | | | US | 2015324985 | A1 | 12 November 2015 |
| | | | | US | 9519954 | B2 | 13 December 2016 |
| | | | | US | 2013286221 | A1 | 31 October 2013 |
| | | | | US | 9098885 | B2 | 04 August 2015 |
| | | | | US | 2017069088 | A1 | 09 March 2017 |
| | | | | US | 9729787 | B2 | 08 August 2017 |
| | | | | WO | 2013163579 | A2 | 31 October 2013 |
| | | | | WO | 2013163579 | A3 | 16 January 2014 |
| US | 2020293816 | A1 | 17 September 2020 | US | 2021012147 | A1 | 14 January 2021 |
| | | | | US | 11334756 | B2 | 17 May 2022 |
| | | | | CA | 3133537 | A1 | 17 September 2020 |
| | | | | US | 2022277544 | A1 | 01 September 2022 |
| | | | | US | 10817747 | B2 | 27 October 2020 |
| | | | | WO | 2020185275 | A1 | 17 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211459711